# EUROPEAN PATENT APPLICATION

(11) **EP 4 645 941 A1**
(43) Date of publication of application: **05.11.2025**
(21) Application number: 22969518.4
(22) Date of filing: 27.12.2022
(51) Int. Cl.: H04W 24/10

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Taor, Simon Edward William
(86) International application number: PCT/CN2022/142305
(87) International publication number: WO 2024/138361

(57) **Abstract**

The embodiments of the present disclosure provide a method for wireless communication, a terminal device, and a network device. The method includes the following. A network device receives *W* pieces of information, where the *W* pieces of information indicate at least one of the following: relevant information of a first event, or relevant information of a second event. The first event include at least one of the following: a first scheme does not meet performance requirements, the first scheme is not recommended for use, the first scheme is unavailable, or a first metric associated with the first scheme does not meet performance requirements; and the second event includes at least one of the following: the first scheme meets performance requirements, the first scheme is recommended for use, the first scheme is available, or the first metric associated with the first scheme meets performance requirements. *W* is a positive integer. The network device determines whether a first condition is met based on the *W* pieces of information, where the first condition includes one of the following: a condition for determining that the first scheme does not meet performance requirements, a condition for determining that the first scheme is unavailable for further use, a condition for determining that the first scheme needs to be terminated, and a condition for determining that the first scheme needs to be updated.

## Description

### TECHNICAL FIELD

The embodiments of the present disclosure relate to the field of communications, and particularly to a method for wireless communication, a terminal device, and a network device.

### BACKGROUND

In a new radio (NR) system, artificial intelligence (Al)/machine learning (ML) may be introduced to enhance system performance. The performance of AI/ML-based schemes may be affected by scenarios, data, and application conditions. Moreover, such influences may result in fluctuations, disturbances, and irregular changes.

In the case of using an AI/ML-based scheme, how to monitor the performance of the AI/ML scheme to determine, in a stable and reliable manner, whether the performance of the AI/ML scheme degrades or whether the AI/ML scheme becomes unavailable, without introducing unnecessary determinations that the scheme has failed as well as unnecessary scheme switching, update, fallback, or other operations, is an issue to be solved.

### SUMMARY

The embodiments of the present disclosure provide a method for wireless communication, a terminal device, and a network device, where the stability of an artificial intelligence (Al)/machine learning (ML)-based scheme can be evaluated at a network side using evaluation results of the AI/ML-based scheme reported by the terminal device. This helps avoid AI/ML performance fluctuations caused by factors such as reporting errors, sample data, temporary environmental changes, or temporary non-fulfillment of application conditions, thereby avoiding unnecessary determinations that the AI/ML-based scheme has failed as well as unnecessary AI/ML scheme switching, and avoiding additional procedures and signaling overhead such as unnecessary updates or reconfigurations of models or schemes.

In a first aspect, a method for wireless communication is provided. The method includes the following. A network device receives *W* pieces of information, where the W pieces of information indicate at least one of the following: relevant information of a first event, or relevant information of a second event. The first event include at least one of the following: a first scheme does not meet performance requirements, the first scheme is not recommended for use, the first scheme is unavailable, or a first metric associated with the first scheme does not meet performance requirements; and the second event includes at least one of the following: the first scheme meets performance requirements, the first scheme is recommended for use, the first scheme is available, or the first metric associated with the first scheme meets performance requirements. *W* is a positive integer. The network device determines whether a first condition is met based on the *W* pieces of information, where the first condition includes one of the following: a condition for determining that the first scheme does not meet performance requirements, a condition for determining that the first scheme is unavailable for further use, a condition for determining that the first scheme needs to be terminated, and a condition for determining that the first scheme needs to be updated.

In a second aspect, a method for wireless communication is provided. The method includes the following. A terminal device transmits *M* pieces of information, where *M* is a positive integer. The *M* pieces of information indicates at least one of the following: relevant information of a first event or relevant information of a second event. the first event is at least one of the following: the first scheme does not meet performance requirements, the first scheme is not recommended for use, the first scheme is unavailable, or a first metric associated with the first scheme does not meet performance requirements; and the second event is at least one of the following: the first scheme meets performance requirements, the first scheme is recommended for use, the first scheme is available, or the first metric associated with the first scheme meets performance requirements.

In a third aspect, a network device is provided. The network device is configured to perform the method in the first aspect. Specifically, the network device includes functional modules configured to execute the method in the first aspect.

In a fourth aspect, a terminal device is provided. The terminal device is configured to perform the method in the second aspect. Specifically, the terminal device includes functional modules configured to execute the method in the second aspect.

In a fifth aspect, a network device is provided. The network device includes a processor and a memory. The memory is configured to store a computer program, and the processor is configured to invoke and execute the computer program stored in the memory, such that the network device performs the method described in the first aspect.

In a sixth aspect, a terminal device is provided. The terminal device includes a processor and a memory. The memory is configured to store a computer program, and the processor is configured to invoke and execute the computer program stored in the memory, such that the terminal device performs the method described in the second aspect.

In a seventh aspect, a device is provided. The device is configured to implement any of the methods in the first to second aspects described above. Specifically, the device includes a processor configured to invoke and execute a computer program from a memory, such that a device equipped with the device performs any of the methods in the first to second aspects.

In an eighth aspect, a computer-readable storage medium is provided, which is configured to store a computer program, where the computer program enables a computer to perform any of the methods in the first to second aspects described above.

In a ninth aspect, a computer program product is provided, which includes computer program instructions, where the computer program instructions enable a computer to perform any of the methods in the first to second aspects described above.

In a tenth aspect, a computer program is provided, which, when executed on a computer, enables the computer to perform any of the methods in the first to second aspects described above.

By means of the above solution, the network device may determine whether the first condition is met based on the relevant information of the first event and/or the relevant information of the second event indicated by one or more terminal devices. Specifically, the first event includes at least one of the following: the first scheme does not meet performance requirements; the first scheme is not recommended for use; the first scheme is unavailable for use; or the first metric associated with the first scheme does not meet performance requirements. The second event includes at least one of the following: the first scheme meets performance requirements; the first scheme is recommended for use; the first scheme is available for use; or the first metric associated with the first scheme meets performance requirements. The first condition includes one of the following: a condition for determining that the first scheme does not meet performance requirements; a condition for determining that the first scheme is unavailable for further use; a condition for determining that the first scheme needs to be terminated; and a condition for determining that the first scheme needs to be updated. That is, the stability of the AI/ML-based scheme can be evaluated at the network side using evaluation results of the AI/ML-based scheme reported by the terminal device(s). This helps avoid AI/ML performance fluctuations caused by factors such as reporting errors, sample data, temporary environmental changes, or temporary non-fulfillment of application conditions, thereby avoiding unnecessary determinations that the AI/ML-based scheme has failed as well as unnecessary AI/ML scheme switching, and avoiding additional procedures and signaling overhead such as unnecessary updates or reconfigurations of models or schemes.

### BRIEF DESCRIPTION OF THE DRAWINGS

FIG. 1 is a schematic diagram of a communication system architecture to which embodiments of the present disclosure are applicable.
FIG. 2 is a schematic diagram illustrating artificial intelligence (AI)-based channel state information (CSI) feedback according to the present disclosure.
FIG. 3 is a schematic diagram illustrating AI-based channel estimation according to the present disclosure.
FIG. 4 is a schematic diagram illustrating AI-based positioning according to the present disclosure.
FIG. 5 is a schematic diagram illustrating AI-based beam management according to the present disclosure.
FIG. 6 is a schematic flow chart of a method for wireless communication according to embodiments of the present disclosure.
FIGS. 7 to 11 are schematic diagrams each illustrating network-side determination of the performance of an AI/machine learning (ML)-based scheme according to embodiments of the present disclosure.
FIG. 12 is a schematic flow chart of another method for wireless communication according to embodiments of the present disclosure.
FIG. 13 is a schematic block diagram of a network device according to embodiments of the present disclosure.
FIG. 14 is a schematic block diagram of a terminal device according to embodiments of the present disclosure.
FIG. 15 is a schematic block diagram of a communication device according to embodiments of the present disclosure.
FIG. 16 is a schematic block diagram of a device according to embodiments of the present disclosure.
FIG. 17 is a schematic block diagram of a communication system according to embodiments of the present disclosure.

### DETAILED DESCRIPTION

The technical solutions in the embodiments of the present disclosure will be described below in conjunction with the accompanying drawings. It is apparent that the described embodiments constitute only a part of the embodiments of the present disclosure, rather than all embodiments of the present disclosure. All other embodiments obtained by those of ordinary skill in the art without creative efforts based on the embodiments of the present disclosure shall fall within the scope of protection of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), internet of things (IoT), a wireless fidelity (WiFi), a 5^{th}-generation (5G) communication system, a 6^{th}-generation (5G) communication system or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, sidelink (SL) communication, or vehicle to everything (V2X) communication, etc. Embodiments of the present disclosure can also be applied to these communication systems.

In some embodiments, the communication system in embodiments of the disclosure may be applied to a carrier aggregation (CA) scenario, or may be applied to a dual connectivity (DC) scenario, may be applied to a standalone (SA) scenario, or may be applied to a non-standalone (NSA) scenario.

Optionally, the communication system in embodiments of the present disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

In some embodiments, the communication system in the present disclosure may be applicable to frequency range 1 (FR1) (corresponding to a frequency range of 410 Megahertz (MHz) to 7.125 Gigahertz (GHz), FR2 (corresponding to a frequency range of 24.25 GHz to 52.6 GHz), as well as new frequency ranges, such as high-frequency bands corresponding to a frequency range of 52.6 GHz to 71 GHz or a frequency range of 71 GHz to 114.25 GHz.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, a vehicle-mounted communication device, an application specific integrated circuit (ASIC)/ a system on chip (SoC), etc.

By way of explanation rather than limitation, in embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the present disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB), or a relay station or AP, or an in-vehicle device, or a wearable device in LTE, a network device (gNB) or a transmission reception point (TRP) in an NR network, a network device in a future evolved PLMN, or a network device in an NTN, etc.

By way of explanation rather than limitation, in embodiments of the present disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the present disclosure, the network device can serve a cell, and the terminal device can communicate with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

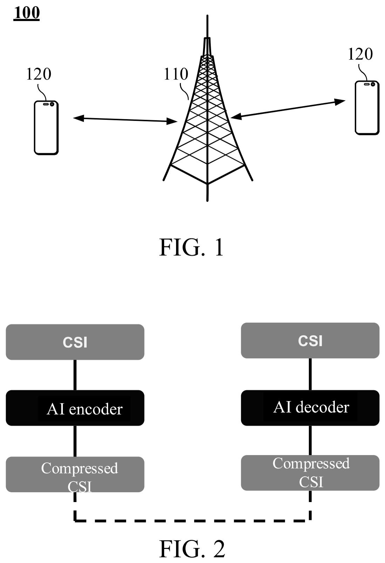

Exemplarily, FIG. 1 illustrates a communication system 100 to which embodiments of the disclosure are applied. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there can be other quantities of terminal devices in a coverage area of each of the network devices. Embodiments of the disclosure are not limited in this regard.

Optionally, the communication system 100 may further include other network entities such as a network controller, a mobility management entity, or the like, and embodiments of the disclosure are not limited in this regard.

It may be understood that, in embodiments of the disclosure, a device with communication functions in a network/system can be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be elaborated again herein. The communication device may further include other devices such as a network controller, a mobility management entity, or other network entities in the communication system 100, and embodiments of the disclosure are not limited in this regard.

It may be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

The terms used in the embodiments of the present disclosure are intended solely to explain specific embodiments of the present disclosure and are not intended to limit the scope of the disclosure. The terms "first", "second", "third", "fourth", and similar terms used in the description, claims, and accompanying drawings of the present disclosure are meant to distinguish between different objects and are not intended to describe a specific order. Furthermore, the terms "include", "comprise", and have" along with any variations thereof, are intended to cover non-exclusive inclusions.

It may be understood that, "indication" referred to in embodiments of the present disclosure may be a direct indication, may be an indirect indication, or may mean that there is an association relationship. For example, *A* indicates *B* may mean that *A* directly indicates *B,* for instance, *B* can be obtained according to *A*; may mean that *A* indirectly indicates *B,* for instance, *A* indicates *C,* and *B* can be obtained according to *C*; or may mean that that there is an association relationship between *A* and*B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configuration" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In the embodiments of the present disclosure, the term "protocol" may refer to standard protocols in the field of communications, such as the evolution of existing LTE protocols, NR protocols, Wi-Fi protocols, or other protocols related to these communication systems. The type of protocol is not limited in the present disclosure.

To better understand the embodiments of the present disclosure, artificial intelligence (AI)-based wireless communication schemes involved in the present disclosure will be explained.

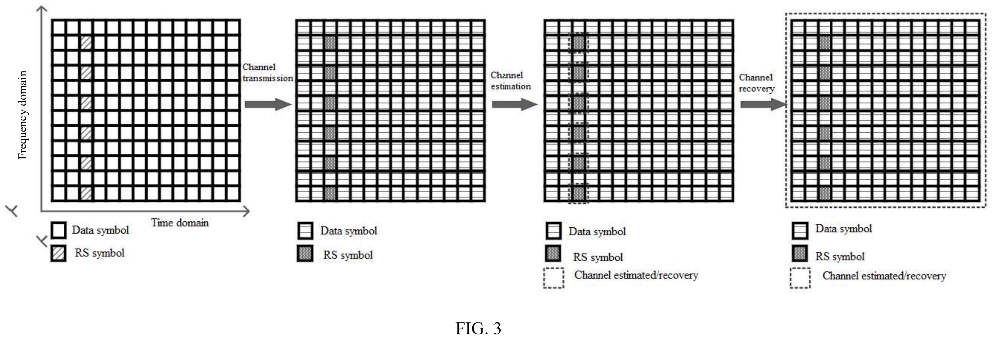

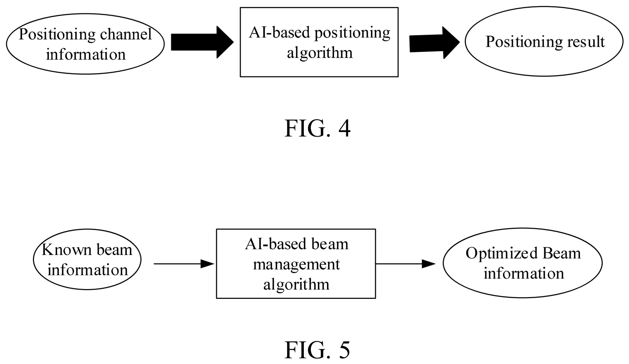

The application of AI-based schemes in wireless communication systems is increasingly widespread. For example, channel state information (CSI) feedback can be achieved through AI. As illustrated in FIG. 2, an AI encoder and an AI decoder are introduced to achieve AI-based CSI compression and feedback. For another example, channel estimation can be achieved through AI. As illustrated in FIG. 3, an AI channel estimator is used to achieve high-performance estimation of a given channel. For yet another example, positioning can be achieved through AI. As illustrated in FIG. 4, according to an AI-based positioning algorithm and relying on positioning channel information, high-precision positioning results can be obtained. For yet another example, beam management can be achieved through AI. As illustrated in FIG. 5, according to an AI-based beam management algorithm and known beam information, optimized or more refined beam information can be obtained or beam information for future can be predicted.

To further clarify the understanding of the embodiments of the present disclosure, methods for evaluating performance of AI/machine learning (ML) schemes involved in the present disclosure are explained.

The performance evaluation of AI/ML schemes is primarily defined based on the inference performance of the AI/ML schemes. For example, for a CSI compression and recovery scheme, CSI recovery accuracy that can be obtained through a specific AI/ML scheme under a specific compression feedback bit condition can be regarded as a performance evaluation metric of the scheme, for example, a difference between ideal CSI information and CSI information recovered after compression (such as normalized mean squared error (NMSE) or mean squared error (MSE) evaluation between CSI information, or similarity evaluation between CSI information) or a difference between CSI information to be compressed and the CSI information recovered after compression (such as NMSE or MSE evaluation between CSI information, or similarity evaluation between CSI information) is used. Similar to the CSI compression and recovery scheme, for a CSI prediction scheme, CSI prediction accuracy that can be obtained through a specific AI/ML scheme can be regarded as a performance evaluation metric of the scheme, for example, a difference between ideal CSI information and CSI information obtained through prediction (such as NMSE or MSE evaluation between CSI information, or similarity evaluation between CSI information) or a difference between target CSI information and the CSI information obtained through prediction (such as NMSE or MSE evaluation between CSI information, or similarity evaluation between CSI information) is used.

To further clarify the understanding of the embodiments of the present disclosure, the issues addressed by the present disclosure are explained.

For AI/ML-based wireless communication schemes, certain performance gains and effective results may be presented. However, it may be pointed out that, in actual applications, how these schemes address performance assurance issues need to be taken into consideration.

For example, in the case of CSI feedback, in practical systems, the performance of the AI/ML-based CSI compression and recovery scheme or the AI-ML based CSI prediction scheme often varies under different scenarios, different data, different inputs, or different usage conditions. Therefore, the performance of the AI/ML-based CSI compression and recovery scheme or the AI/ML-based CSI prediction scheme needs to be monitored. When the performance of the aforementioned schemes is satisfactory, relatively high compression and recovery performance or relatively accurate prediction performance can be achieved, and thus these schemes need to be further used. However, if it is predicted that the schemes will not be able to or already cannot provide effective CSI compression and recovery performance or relatively accurate prediction performance, the schemes will not be further used.

Similar performance monitoring requirements apply to other cases, such as AI/ML-based beam management (e.g., time domain-based beam prediction, spatial domain-based beam prediction), the AI/ML-based positioning scheme, AI/ML-based channel estimation and encoding/decoding schemes, etc.

It may be noted that, for AI/ML-based schemes, such as the AI/ML-based CSI compression and recovery scheme, or the AI/ML-based prediction scheme, or other AI/ML-based schemes, their performance may be influenced by scenarios, data, or application conditions. This influence may result in issues such as fluctuations, disturbances, and irregular changes. In actual commercial systems, determining that an AI/ML scheme has failed due to short-term performance degradation could easily introduce unnecessary determination that the AI/ML scheme has failed as well as unnecessary scheme switching, and could also lead to additional procedures and signaling overhead such as unnecessary updates or reconfigurations of models or schemes. For instance, if a CSI compression and recovery scheme temporarily underperforms but later returns to normal, it is unnecessary to determine that the scheme has failed and trigger a new replacement scheme, or it is unnecessary to determine that the scheme has failed, then trigger a new replacement scheme, and then re-use the scheme.

Moreover, in AI/ML scheme evaluation, considering the existence of both UE and network sides in wireless communication systems, especially in AI/ML scheme evaluation that requires cooperation between the UE and network, performance fluctuation caused by a single sample is filtered and removed, thereby achieving relatively stable, sample-level AI/ML performance determination. Based on this, at the system level, the network also needs to perform a larger-scale AI/ML stability evaluation based on fundamental evaluation results of AI/ML, taking into account the costs of AI/ML scheme updates and replacements, so as to avoid errors in AI/ML scheme evaluation caused by errors in fundamental evaluation, and obtain relatively reliable AI/ML evaluation results within a relatively stable evaluation range.

In summary, in the case of using an AI/ML-based scheme, such as an AI/ML-based CSI compression and recovery scheme, or an AI/ML-based CSI prediction scheme, how to monitor the performance of the scheme to make stable and reliable decisions regarding the degradation of the performance of the AI/ML scheme or unavailability of the AI/ML scheme, without introducing unnecessary determination that the scheme has failed as well as unnecessary scheme switching, update, or fallback, is an issue that needs to be addressed.

Based on this issue, the present disclosure provides a solution that can be applied in wireless communication systems, considering both UE-trigger and network-trigger scenarios. Specifically, stability of an AI/ML scheme can be evaluated at the network side through using evaluation results of the AI/ML scheme reported by the terminal device. This helps avoid AI/ML performance fluctuations caused by factors such as reporting errors, sample data, temporary environmental changes, or temporary non-fulfillment of application conditions, and thus avoids unnecessary determination that the AI/ML scheme has failed as well as unnecessary AI/ML scheme switching, and avoids additional procedures and signaling overhead such as updates or reconfigurations of models or schemes.

The present disclosure is to provide a solution for performing a secondary stability evaluation on an AI/ML scheme at the network side, and specifically, describe how to implement, based on different results reported by UE, stability evaluation on the AI/ML scheme at the network side, in conjunction with different feasible schemes that UE reports a first event or a second event. The present disclosure aims to mitigate AI/ML performance fluctuations caused by factors such as a single failure reporting. This solution outlines a series of methods for handling the above issues in conjunction with different embodiments and implementation branches, including: designs for a stability evaluation phase and a fundamental evaluation phase, and stable evaluation methods and fundamental evaluation methods for CSI compression and recovery, CSI prediction, positioning, beam prediction, and beam selection.

To facilitate understanding of the technical solutions in the present disclosure, the technical solutions in the present disclosure will described in detail through the following specific embodiments. The related technologies as an optional solution can be combined with the technical solutions of the embodiments of the present disclosure in any manner, and all such combinations fall within the scope of the present disclosure. The embodiments of the present disclosure include at least some of the following content.

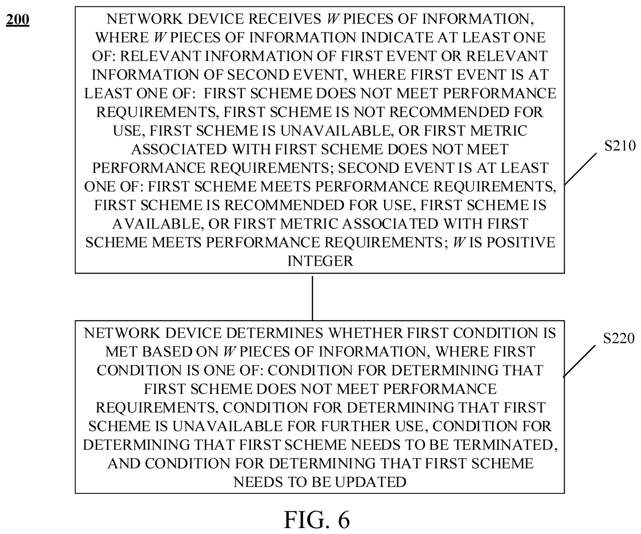

FIG. 6 is a schematic flow chart of a method 200 for wireless communication according to embodiments of the present disclosure. As illustrated in FIG. 6, the method 200 for wireless communication may include at least part of the following.

S210, a network device receives *W* pieces of information, where the *W* pieces of information indicate at least one of the following: relevant information of a first event or relevant information of a second event. The first event is at least one of the following: the first scheme does not meet performance requirements, the first scheme is not recommended for use, the first scheme is unavailable, or a first metric associated with the first scheme does not meet performance requirements. The second event is at least one of the following: the first scheme meets performance requirements, the first scheme is recommended for use, the first scheme is available, or the first metric associated with the first scheme meets performance requirements. W is a positive integer.

S220, the network device determines whether a first condition is met based on the W pieces of information, where the first condition is one of the following: a condition for determining that the first scheme does not meet performance requirements, a condition for determining that the first scheme is unavailable for further use, a condition for determining that the first scheme needs to be terminated, and a condition for determining that the first scheme needs to be updated.

In the embodiments of the present disclosure, the stability of an AI/ML scheme (i.e., the first scheme) may be evaluated at the network side using evaluation results of the AI/ML scheme (i.e., the first scheme) reported by a terminal device. This helps avoid AI/ML performance fluctuations caused by factors such as reporting errors, sample data, temporary environmental changes, or temporary non-fulfillment of application conditions, thereby avoiding unnecessary determination that the AI/ML scheme (i.e., the first scheme) has failed as well as unnecessary switching for the AI/ML scheme (i.e., the first scheme), and avoiding additional procedures and signaling overhead such as unnecessary updates or reconfigurations of models or schemes.

In the embodiments of the present disclosure, the first event corresponds to that the first scheme is of relatively poor performance, and the second event corresponds to that the first scheme is of relatively good performance.

In some embodiments, the first scheme includes but is not limited to one of the following: an AI/ML-based CSI compression and recovery scheme, an AI/ML-based CSI prediction scheme, an AI/ML-based positioning scheme, an AI/ML-based spatial filter prediction scheme, or an AI/ML-based spatial filter selection scheme.

In the embodiments of the present disclosure, when the network device determines that the first condition is met, the network device may determine that the first scheme does not meet performance requirements, and/or determine that the first scheme is unavailable for further use, and/or determine that the first scheme needs to be terminated, and/or determine that the first scheme needs to be updated.

That is, in the embodiments of the present disclosure, the network evaluates, based on the first event and/or the second event, whether the AI/ML-based CSI compression and recovery scheme, the AI/ML-based CSI prediction scheme, the AI/ML-based positioning scheme, the AI/ML-based beam prediction scheme, or the AI/ML-based beam selection scheme is of relatively poor performance, is unavailable for further use, needs to be terminated, and/or needs to be updated.

In some embodiments, when the network device determines that the first condition is met, the network device determines that a third event has occurred, where the third event refers to that the network determines that the performance evaluation result of the first scheme is not satisfactory, or determines that the first scheme is available for further use, or determines that the first scheme needs to be terminated, or determines that the first scheme needs to be updated.

In some embodiments, the first metric associated with the first scheme may refer to a performance metric of a communication system, such as a data transmission rate, a data transmission latency, a data transmission error rate, channel quality, and so on. Alternatively, the first metric associated with the first scheme may refer to power consumption of the terminal device.

In some embodiments, the W pieces of information are transmitted by a single terminal device, where model management and performance evaluation at a terminal granularity are performed between the terminal device and the network device.

In some embodiments, the W pieces of information are transmitted by multiple terminal devices, where model management and performance evaluation at a base station or network granularity are performed between the multiple terminal devices and the network device.

In some embodiments, among the W pieces of information, information indicating the relevant information of the first event refers to AI/ML model error information or AI/ML model underperformance information; and/or among the W pieces of information, information indicating the relevant information of the second event refers to AI/ML model work information or AI/ML model performance compliance information.

In some embodiments, the *W* pieces of information are carried via uplink control information (UCI) or radio resource control (RRC) signaling. Certainly, the *W* pieces of information may be carried via other signaling, and the present disclosure is not limited in this regard.

It may be noted that, the *W* pieces of information may be reported via UCI. However, for reporting regarding an evaluation window (such as a first evaluation window mentioned later), more effective indication may be achieved through an RRC message. This is because reporting regarding the evaluation window is typically achieved based on a relatively long window or statistical results of multiple determinations, and thus there is no need to use schemes such as UCI for rapid reporting in terms of time sensitivity. Instead, an RRC message can be used to both achieve reporting and avoid occupying UCI resources.

Optionally, different information among the *W* pieces of information may be carried via the same signaling or different signaling.

In some embodiments, when *W* ≥ 2, the *W* pieces of information are *W* pieces of information periodically transmitted.

In some embodiments, a transmission period of the *W* pieces of information is specified by a protocol or configured by the network device.

In some embodiments, the network device configures the transmission period of the *W* pieces of information via downlink control information (DCI), a medium access control (MAC) control element (MAC CE), RRC signaling, an RRC reconfiguration message, system broadcast, a master information block (MIB), a system information block 1 (SIB1), or other SIBs.

It may be noted that, DCI and MAC CE are mainly characterized by faster indication and quicker update. RRC signaling and RRC reconfiguration messages are mainly characterized by occupying no physical downlink control channel (PDCCH) resources and relatively flexible configuration. In the case of configuring via system broadcast, MIB/SIB1/SIB, and other manners, configuration for more UEs can be achieved with fewer resources in a broadcast manner, facilitating unified cell management.

In some embodiments, the *W* pieces of information are triggered by the first event and/or the second event.

In some embodiments, the relevant information of the first event includes whether the first event has occurred, and/or the relevant information of the second event includes whether the second event has occurred.

In some embodiments, the *W* pieces of information include at least one piece of first information. A bit value of each piece of first information indicates that the first event has occurred, and another bit value of each piece of first information indicates that the first event has not occurred.

Optionally, each piece of first information occupies one bit. For example, a bit value of 0 indicates that the first event has occurred, while a bit value of 1 indicates that the first event has not occurred. For another example, a bit value of 1 indicates that the first event has occurred, while a bit value of 0 indicates that the first event has not occurred.

In some embodiments, the W pieces of information include at least one piece of second information. A bit value of each piece of second information indicates that the second event has occurred, and another bit value of each piece of second information indicates that the second event has not occurred.

Optionally, each piece of second information occupies one bit. For example, a bit value of 0 indicates that the second event has occurred, while a bit value of 1 indicates that the second event has not occurred. For another example, a bit value of 1 indicates that the second event has occurred, while a bit value of 0 indicates that the second event has not occurred.

In some embodiments, the *W* pieces of information include at least one piece of third information. A bit value of each piece of third information indicates that the first event has occurred, and another bit value of the third information indicates that the second event has occurred.

Optionally, each piece of third information occupies one bit. For example, a bit value of 0 indicates that the first event has occurred, while a bit value of 1 indicates that the second event has occurred. For another example, a bit value of 1 indicates that the first event has occurred, while a bit value of 0 indicates that the second event has occurred.

In some embodiments, the *W* pieces of information include at least one piece of fourth information. Each piece of fourth information includes *K₁ N₁*-bit bitmaps, where a first value in each *N₁*-bit bitmap indicates that the first event has occurred, a second value in each *N₁*-bit bitmap indicates that the first event has not occurred, and the number of occurrences of the first value in each *N₁*-bit bitmap represents the number of times of occurrences of the first event in *N₁* evaluations, where *K₁* and *N₁* are both positive integers.

Optionally, in each piece of fourth information, the first value is 1, and the second value is 0. For example, in the case where the terminal device reports 11001011 (an 8-bit bitmap, i.e., *K₁ =* 1, *N₁ =* 8), it indicates that the first event has occurred 5 times in 8 evaluations (specifically in the 1st, 2nd, 5th, 7th, and 8th evaluations). For another example, in the case where the terminal device reports 11001011 11111111 (two 8-bit bitmaps, i.e., *K₁=*2, *N₁=*8), it indicates the first event has occurred 13 times in 16 evaluations (specifically in the 1st, 2nd, 5th, 7th, 8th, and 9th - 16th evaluations).

Optionally, in each piece of fourth information, the first value is 0, and the second value is 1. For example, in the case where the terminal device reports 11001011 (an 8-bit bitmap, i.e., *K₁ = 1, N₁ =* 8), it indicates that the first event has occurred 3 times in 8 evaluations (specifically in the 3rd, 4th, and 6th evaluations). For another example, in the case where the terminal device reports 11001011 11111111 (two 8-bit bitmaps, i.e., *K₁ =* 2, *N₁ =* 8), it indicates the first event has occurred 3 times in 16 evaluations (specifically in the 3rd, 4th, and 6th evaluations).

In some embodiments, the *W* pieces of information include at least one piece of fifth information. The fifth information includes *K₂ N₂*-bit bitmaps. A first value in each N2-bit bitmap indicates that the second event has occurred, a second value in each N2-bit bitmap indicates that the second event has not occurred, and the number of occurrences of the first value in each *N₂*-bit bitmap represents the number of times of occurrences of the second event in *N*₂ evaluations, where *K₂* and *N₂* are positive integers.

Optionally, in each piece of fifth information, the first value is 1, and the second value is 0. For example, in the case where the terminal device reports 11001011 (an 8-bit bitmap, i.e., *K₂*=1, *N₂=*8), it indicates that the second event has occurred 5 times in 8 evaluations (specifically in the 1st, 2nd, 5th, 7th, and 8th evaluations). For another example, in the case where the terminal device reports 11001011 11111111 (two 8-bit bitmaps, i.e., *K₁ = 2, N₁ =* 8), it indicates that the second event has occurred 13 times in 16 evaluations (specifically in the 1st, 2nd, 5th, 7th, 8th, and 9th - 16th evaluations).

Optionally, in each piece of fifth information, the first value is 0, and the second value is 1. For example, in the terminal device reports 11001011 (an 8-bit bitmap, i.e., *K₁* = 1*, N₁ =* 8), it indicates that the second event has occurred 3 times in 8 evaluations (specifically in the 3rd, 4th, and 6th evaluations). For another example, in the case where the terminal device reports 11001011 11111111 (two 8-bit bitmaps, i.e., *K₁* = 2, *N₁* = 8), it indicates that the second event has occurred 3 times in 16 evaluations (specifically in the 3rd, 4th, and 6th evaluations).

In some embodiments, the *W* pieces of information include at least one piece of sixth information. Each piece of sixth information includes *K₃ N₃*-bit bitmaps. A first value in each *N₃*-bit bitmap indicates that the first event has occurred, and a second value in each *N₃*-bit bitmap indicates that the second event has occurred, the number of occurrences of the first value in each *N₃*-bit bitmap represents the number of times of occurrences of the first event in *N₃* evaluations, and the number of occurrences of the second value in each *N₃*-bit bitmap represents the number of times of occurrences of the second event in *N₃* evaluations, where *K₃* and *N₃* are positive integers.

Optionally, in each piece of sixth information, the first value is 1, and the second value is 0. For example, in the case where the terminal device reports 11001011 (an 8-bit bitmap, i.e., *K₃* = *1, N₃* = 8), it indicates that the first event has occurred 5 times in 8 evaluations (specifically in the 1st, 2nd, 5th, 7th, and 8th evaluations) and the second event has occurred 3 times in 8 evaluations (specifically in the 3rd, 4th, and 6th evaluations). For another example, in the case where the terminal device reports 11001011 11111111 (two 8-bit bitmaps, i.e., *K₃ = 2, N₃* = 8), it indicates that the first event has occurred 13 times in 16 evaluations (specifically in the 1st, 2nd, 5th, 7th, 8th, and 9th-16th evaluations) and the second event has occurred 3 times in 16 evaluations (specifically in the 3rd, 4th, and 6th evaluations).

Optionally, in each piece of sixth information, the first value is 0, and the second value is 1. For example, in the case where the terminal device reports 11001011 (an 8-bit bitmap, i.e., *K₃* = *1, N₃* = 8), it indicates that the second event has occurred 5 times in 8 evaluations (specifically in the 1st, 2nd, 5th, 7th, and 8th evaluations) and the first event has occurred 3 times in 8 evaluations (specifically in the 3rd, 4th, and 6th evaluations). For another example, in the case where the terminal device reports 11001011 11111111 (two 8-bit bitmaps, i.e., *K₃ = 2, N₃ =* 8), it indicates that the second event has occurred 13 times in 16 evaluations (specifically in the 1st, 2nd, 5th, 7th, 8th, and 9^{th} - 16th evaluations) and the first event has occurred 3 times in 16 evaluations (specifically in the 3rd, 4th, and 6th evaluations).

In some embodiments, S220 may specifically include the following. In the case where the W pieces of information indicate that the first event has occurred, or in the case where the W pieces of information include information indicating that the first event has occurred, or in the case where the W pieces of information is one piece of information indicating that the first event has occurred, the network device determines that the first condition is met.

For example, in the context of the AI/ML-based CSI compression and recovery scheme, or the AI/ML-based CSI prediction scheme, or the AI/ML-based positioning scheme, or the AI/ML-based beam prediction scheme, or the AI/ML-based beam selection scheme, in the case where the network device has received an indication indicating that the first event has occurred, the network device may determine that the corresponding first scheme based on AL/ML is of relatively low performance, is unavailable for further use, needs to be terminated, or needs to be updated.

In some embodiments, S220 may specifically include the following. In the case where the *W* pieces of information indicate that the first event has consecutively occurred *S₁* times, or in the case where the *W* pieces of information include information indicating that the first event has consecutively occurred *S₁* times, or in the case where the *W* pieces of information include *S₁* consecutive pieces of information each indicating that the first event has occurred, or in the case where the *W* pieces of information are *S₁* consecutive pieces of information each indicating that the first event has occurred, the network device determines that the first condition is met, where *S₁* is a positive integer and *S₁* ≥ 2.

Optionally, *S₁* is predefined by a protocol, for example, *S₁* may be 2, 4, 5, 8, 10, 15, 16, 20, 32, 40, etc.

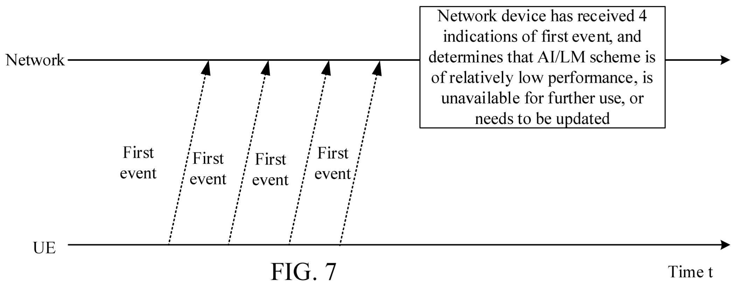

For a specific example, as illustrated in FIG. 7, in the case where the network has received 4 indications each indicating the first event, the network may determine that the AI/ML-based scheme is of relatively low performance, is unavailable for further use, or needs to be updated.

In some embodiments, S220 may specifically include the following. When the number of pieces of information each indicating occurrence of the first event among the *W* pieces of information is greater than or equal to *S₂*, or when the number of occurrences of the first event indicated by the *W* pieces of information is greater than or equal to *S₂*, or when the W pieces of information are *S₂* pieces of information each indicating occurrence of the first event, or when the W pieces of information are *S₂* pieces of information indicating consecutive occurrences of the first event, the network device determines that the first condition is met, where *S₂* is a positive integer. Optionally, *S₂* is predefined by a protocol.

For example, the network has received *W* indications of the first event and/or the second event. Among the *W* indications of the first event and/or the second event, in the case where the number of indications of the first event is no less than threshold *S₂*, the network device determines that the corresponding first scheme is of relatively low performance, is unavailable for further use, needs to be terminated, or needs to be updated. For instance, in the context of the AI/ML-based CSI compression and recovery scheme, the AI/ML-based CSI prediction scheme, the AI/ML-based positioning scheme, the AI/ML-based beam prediction scheme, or the AI/ML-based beam selection scheme, in the case where the network has received *W* indications of the first event and/or the second event, among which there are *S₂* indications of the first event, the network determines that the corresponding first scheme based on AI/ML is of relatively low performance, is unavailable for further use, needs to be terminated, or needs to be updated.

In some embodiments, S220 may specifically include the following. When the number of pieces of information each indicating occurrence of the first event and received within a second evaluation window among the *W* pieces of information is greater than or equal to *S₃*, or when the number of occurrences of the first event indicated by information received within the second evaluation window among the *W* pieces of information is greater than or equal to *S₃*, or when the *W* pieces of information are information received within the second evaluation window and indicating that the number of occurrences of the first event is greater than or equal to *S₃*, the network device determines that the first condition is met, where *S₃* is a positive integer.

Optionally, *S₃* may be predefined by a protocol. Certainly, *S₃* may be configured by the network device, and the embodiments of the present disclosure is not limited in this regard.

In some embodiments, the second evaluation window occupies at least one time unit, where the time unit includes but is not limited to one of: millisecond, second, minute, hour, symbol, slot, subframe, or frame. Optionally, the second evaluation window may be defined by a protocol. Certainly, the second evaluation window may be configured by the network device, and the embodiments of the present disclosure is not limited in this regard.

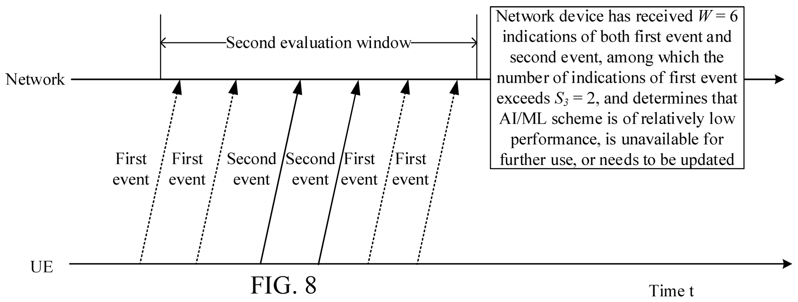

For a specific example, as illustrated in FIG. 8, when the network device has received *W =* 6 indications of both the first event and the second event within the second evaluation window, among which the number of the indications of the first event exceeds *S₃* = 2, the network determines that the corresponding first scheme based on AI/ML is of relatively low performance, is unavailable for further use, needs to be terminated, or needs to be updated.

In some embodiments, S220 may specifically include the following. When the *W* pieces of information include *S₄* pieces of information each indicating occurrence of the first event, or when the *W* pieces of information include *S₄* consecutive pieces of information each indicating occurrence of the first event, or when the *W* pieces of information are *S₄* pieces of information each indicating occurrence of the first event, or when the *W* pieces of information are *S₄* consecutive pieces of information each indicating occurrence of the first event, or when the *W* pieces of information include at least *S₄* pieces of information each indicating occurrence of the first event, or when the *W* pieces of information include at least *S₄* consecutive pieces of information each indicating occurrence of the first event, the network device activates a third evaluation window. When the network device has received, within the third evaluation window, *S₅* pieces of information each indicating occurrence of the first event, or when the network device has consecutively received, within the third evaluation window, *S₅* pieces of information each indicating occurrence of the first event, the network device determines that the first condition is met, where both *S₄* and *S₅* are positive integers, and *S₄* ≥ 2 and *S₅* ≥ 2.

Optionally, *S₄* may be defined by a protocol. Certainly, *S₄* may also be configured by the network device, and the embodiments of the present disclosure is not limited in this regard.

Optionally, *S₅* may be defined by a protocol. Certainly, *S₅* may also be configured by the network device, and the embodiments of the present disclosure is not limited in this regard.

In some embodiments, the third evaluation window occupies at least one time unit, where the time unit includes but is not limited to one of: millisecond, second, minute, hour, symbol, slot, subframe, or frame. Optionally, the third evaluation window may be defined by a protocol. Certainly, the third evaluation window may also be configured by the network device, and the embodiments of the present disclosure is not limited in this regard.

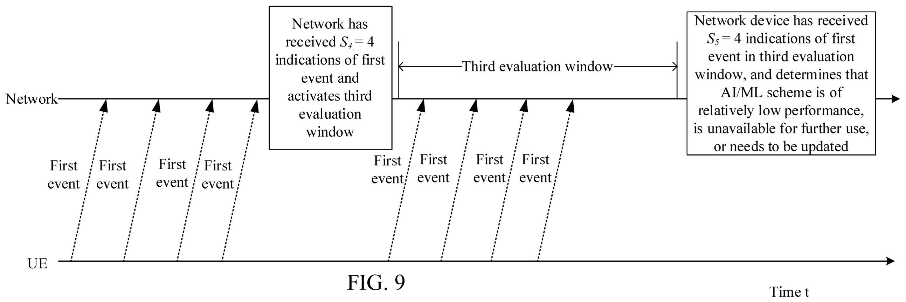

For a specific example, as illustrated in FIG. 9, the network device has received *S₄ =* 4 indications of the first event and activates the third evaluation window. In the third evaluation window, the network device has received *S₅* = 4 indications of the first event, and the network determines that the corresponding first scheme based on AI/ML is of relatively low performance, is unavailable for further use, needs to be terminated, or needs to be updated.

In some embodiments, S220 may specifically include the following. When the *W* pieces of information include *S₆* pieces of information each indicating occurrence of the first event, or when the *W* pieces of information include *S₆* consecutive pieces of information each indicating occurrence of the first event, or when the *W* pieces of information are *S₆* pieces of information each indicating occurrence of the first event, or when the *W* pieces of information are S6 consecutive pieces of information each indicating occurrence of the first event, or when the *W* pieces of information include at least *S₆* pieces of information each indicating occurrence of the first event, or when the *W* pieces of information include at least *S₆* consecutive pieces of information each indicating occurrence of the first event, the network device activates a first timer. When the network device has received, before the first timer expires, *S₇* pieces of information each indicating occurrence of the first event, or when the network device has consecutively received, before the first timer expires, *S₇* pieces of information each indicating occurrence of the first event, the network device determines that the first condition is met, where both *S₆* and *S₇* are positive integers, and *S₆* ≥ 2 and *S₆* ≥ 2.

Optionally, *S₆* may be defined by a protocol. Certainly, *S₆* may also be configured by the network device, and the embodiments of the present disclosure is not limited in this regard.

Optionally, *S₇* may be defined by a protocol. Certainly, *S₇* may also be configured by the network device, and the embodiments of the present disclosure is not limited in this regard.

In some embodiments, the first timer has a running duration of at least one time unit, where the time unit includes but is not limited to one of: millisecond, second, minute, hour, symbol, slot, subframe, or frame. Optionally, the first timer may be defined by a protocol. Certainly, the first timer may also be configured by the network device, and the embodiments of the present disclosure is not limited in this regard.

For example, in the AI/ML-based CSI compression and recovery scheme, when the network has received *S₆ =* 10 indications of the first event (unstable performance indication), the network activates the first timer *T.* The duration of the first timer *T* is 50 ms. If the network has consecutively received *S₇ =* 5 indications of the first event (unstable performance indication) before expiration of the first timer *T,* the network determines that the corresponding first scheme, i.e., the AI/ML-based CSI compression and recovery scheme, is of relatively low performance, is unsuitable for further use, needs to be terminated, and needs to be updated.

For another example, in the AI/ML-based CSI compression and recovery scheme, when the network has received *S₆ =* 5 indications of the first event (unstable performance indication), the network activates the first timer *T.* The duration of the first timer T is 100 ms. If the network has received *S₇ =* 10 indications of the first event (unstable performance indication) before expiration of the first timer *T,* the network determines that the corresponding first scheme, i.e., the AI/ML-based CSI compression and recovery scheme, is of relatively low performance, is unsuitable for further use, needs to be terminated, or needs to be updated.

In some embodiments, S220 may specifically include the following. When the *W* pieces of information include *S₈* pieces of information each indicating occurrence of the first event, or when the *W* pieces of information include *S₈* consecutive pieces of information each indicating occurrence of the first event, or when the *W* pieces of information are *S₈* pieces of information each indicating occurrence of the first event, or when the *W* pieces of information are *S₈* consecutive pieces of information each indicating occurrence of the first event, or when the *W* pieces of information include at least *S₈* pieces of information each indicating occurrence of the first event, or when the *W* pieces of information include at least *S₈* consecutive pieces of information each indicating occurrence of the first event, the network device activates a fourth evaluation window. When the network device does not receive, within the fourth evaluation window, *S₉* pieces of information each indicating occurrence of the second event, or when the network device does not consecutively receive, within the fourth evaluation window, *S₉* pieces of information each indicating occurrence of the second event, the network device determines that the first condition is met, where both *S₈* and *S₉* are positive integers, and *S₈* ≥ 2 and *S₉* ≥ 2.

Optionally, *S₈* is specified by a protocol. Certainly, *S₈* may also be configured by the network device, and the embodiments of the present disclosure are not limited in this regard.

Optionally, *S₉* is specified by a protocol. Certainly, *S₉* may also be configured by the network device, and the embodiments of the present disclosure are not limited in this regard.

In some embodiments, the fourth evaluation window occupies at least one time unit, where the time unit includes but is not limited to one of: millisecond, second, minute, hour, symbol, slot, subframe, and frame. Optionally, the fourth evaluation window is specified by a protocol. Certainly, the fourth evaluation window may also be configured by the network device, and the embodiments of the present disclosure are not limited in this regard.

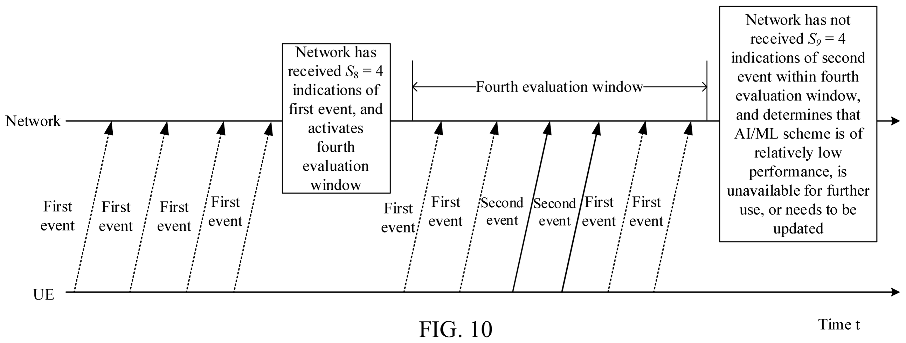

Specifically, for example, as illustrated in FIG. 10, when the network device has received *S₈* = 4 indications of the first event, the network device activates the fourth evaluation window. If the network device has received *S₉* = 4 indications of the second event within the fourth evaluation window, the network determines that the corresponding first scheme based on AI/ML is unavailable for further use, needs to be terminated, or needs to be updated.

In some embodiments, S220 may specifically include the following. When the *W* pieces of information include *S₁₀* pieces of information each indicating occurrence of the first event, or when the *W* pieces of information include *S₁₀* consecutive pieces of information each indicating occurrence of the first event, or when the *W* pieces of information are *S₁₀* pieces of information each indicating occurrence of the first event, or when the *W* pieces of information are *S₁₀* consecutive pieces of information each indicating occurrence of the first event, the network device activates a second timer. When the network device does not receive, before the second timer expires, *S₁₁* pieces of information each indicating occurrence of the second event, or when the network device does not consecutively receive, before the second timer expires, *S₁₁* pieces of information each indicating occurrence of the second event, the network device determines that the first condition is met, where both *S₁₀* and *S₁₁* are positive integers, and *S₁₀* ≥ 2 and S11 ≥ 2.

Optionally, *S₁₀* is specified by a protocol. Certainly, *S₁₀* may also be configured by the network device, and the embodiments of the present disclosure are not limited in this regard.

Optionally, *S₁₁* is specified by a protocol. Certainly, *S₁₁* may be configured by the network device, and the embodiments of the present disclosure are not limited in this regard.

In some embodiments, the second timer has a running duration of at least one time unit, where the time unit includes but is not limited to one of: millisecond, second, minute, hour, symbol, slot, subframe, or frame. Optionally, the second timer is specified by a protocol. Certainly, the second timer may also be configured by the network device, and the embodiments of the present disclosure are not limited in this regard.

In a more specific example, in the AI/ML-based CSI compression and recovery scheme, when the network has received *S₁₀ =* 10 indications of the first event (unstable performance indication), the network activates the second timer. The duration of the second timer is 50 ms. If the network has consecutively received *S₁₁* = 5 indications of the second event (stable performance indication) before the second timer expires, the second timer is stopped. If the network does not consecutively receive *S₁₁ =* 5 indications of the second event (stable performance indication), the second timer continues to run until the second timer expires. If the second timer expires, the network determines that the corresponding first scheme, i.e., the AI/ML-based CSI compression and recovery scheme, is unavailable for further use, needs to be terminated, or needs to be updated.

For another example, in the AI/ML-based CSI compression and recovery scheme, when the network has received *S₁₀ =* 5 indications of the first event (unstable performance indication), the network activates the second timer. The duration of the second timer is 100 ms. If the network has received *M =* 10 indications of the second event (stable performance indication) before the second timer expires, the second timer is stopped. If the network does not receive *S₁₁* = 10 indications of the second event (stable performance indication), the second timer continues to run until the second timer expires. If the second timer expires, the network determines that the corresponding first scheme, i.e., the AI/ML-based CSI compression and recovery scheme, is unavailable for further use, needs to be terminated, or needs to be updated.

In some embodiments, the relevant information of the first event includes the number of occurrences of the first event within at least one first evaluation window, and/or the relevant information of the second event includes the number of occurrences of the second event within the at least one first evaluation window.

In some embodiments, the *W* pieces of information include seventh information, where at least one bit of the seventh information indicates the number of occurrences of the first event within the at least one first evaluation window, and/or at least one bit of the seventh information indicates the number of occurrences of the second event within the at least one first evaluation window.

In some embodiments, the *W* pieces of information include eighth information and ninth information, where at least one bit of the eighth information indicates the number of occurrences of the first event within the at least one first evaluation window, and at least one bit of the ninth information indicates the number of occurrences of the second event within the at least one first evaluation window.

In some embodiments, the first evaluation window occupies at least one time unit, where the time unit includes but is not limited to one of: millisecond, second, minute, hour, symbol, slot, subframe, or frame. Optionally, the first evaluation window is specified by a protocol. Certainly, the first evaluation window may also be configured by the network device, and the embodiments of the present disclosure are not limited in this regard.

For example, the value of the first evaluation window may be *X* milliseconds (e.g., 1 ms, 5 ms, 10 ms, 20 ms, 40 ms, 50 ms, 80 ms, 160 ms, etc.), *X* seconds, *X* minutes, or *X* hours. For another example, the value of the first evaluation window may be *X* slots, or *X* frames, or *X* subframes. For example, the base station may configure or indicate the first evaluation window to the UE via DCI, an MAC CE, RRC signaling, an RRC reconfiguration message, system broadcast, a MIB, SIB1, a SIB, or the like.

In some embodiments, S220 may specifically include the following. When *K₁* is greater than or equal to a first threshold, or when *K₂* is less than a second threshold, or when a ratio of *K₁* to *K₁* + *K₂* is greater than or equal to a third threshold, or when a ratio of *K₂* to *K₁* + *K₂* is less than a fourth threshold, the network device determines that the first condition is met. The *W* pieces of information indicate that the number of occurrences of the first event is *K₁,* or the *W* pieces of information indicate that the number of consecutive occurrences of the first event is *K₁*, or the W pieces of information include information indicating that the number of occurrences of the first event is *K₁*, or the *W* pieces of information include information indicating that the number of consecutive occurrences of the first event is *K₁*; and/or the *W* pieces of information indicate that the number of occurrences of the second event is *K₂*, or the *W* pieces of information indicate that the number of consecutive occurrences of the second event is *K₂*, or the *W* pieces of information include information indicating that the number of occurrences of the second event is *K₂*, or the *W* pieces of information include information indicating that the number of consecutive occurrences of the second event is *K₂*, where both *K₁* and *K₂* are positive integers.

Optionally, the first threshold is specified by a protocol, or the first threshold is configured or determined by the network device.

Optionally, the second threshold is specified by a protocol, or the second threshold is configured or determined by the network device.

Optionally, the third threshold is specified by a protocol, or the third threshold is configured or determined by the network device.

Optionally, the fourth threshold is specified by a protocol, or the fourth threshold is configured or determined by the network device.

In a more specific example, in the AI/ML-based beam selection scheme, the first threshold is 8 times, and the *W* pieces of information indicate that the number of occurrences of the first event is *K₁ =* 10, which exceeds the first threshold. In this case, the network determines that the corresponding AI/ML-based beam selection scheme is of low performance, is unavailable for further use, needs to be terminated, or needs to be updated.

In another example, in the AI/ML-based positioning scheme, the second threshold is 10 times, and the *W* pieces of information indicate that the number of occurrences of the second event is *K₂* = 8, which is less than the second threshold. In this case, the network determines that the corresponding AI/ML-based positioning scheme is of relatively low performance, is unavailable for further use, needs to be terminated, or needs to be updated.

In another example, in the AI/ML-based beam prediction scheme, the third threshold is 0.4 times, and the *W* pieces of information indicate that the number of occurrences of the first event is *K₁* = 6 and the number of occurrences of the second event is *K₂ =* 4, where the ratio of *K₁* / (K1 *+ K₂*) exceeds the third threshold. In this case, the network determines that the corresponding AI/ML-based beam prediction scheme is of low performance, is unavailable for further use, needs to be terminated, or needs to be updated.

In another example, in the AI/ML-based CSI compression and recovery scheme, the fourth threshold is 0.8 times, and the *W* pieces of information indicate that the number of occurrences of the first event is *K₁* = 5 and the number of occurrences of the second event is *K₂ =* 5, where the ratio of *K₂* / (*K₁ + K₂*) is less than the fourth threshold. In this case, the network determines that the corresponding AI/ML-based CSI compression and recovery scheme is of low performance, is unavailable for further use, needs to be terminated, or needs to be updated.

In some embodiments, S220 may specifically include the following. When the *W* pieces of information include one piece of information indicating that the number of occurrences of the first event is greater than or equal to the first threshold, or when the W pieces of information include *Q₁* pieces of information each indicating that the number of occurrences of the first event is greater than or equal to the first threshold, or when the *W* pieces of information include *Q₁* consecutive pieces of information each indicating that the number of occurrences of the first event is greater than or equal to the first threshold, or when the *W* pieces of information is one piece of information indicating that the number of occurrences of the first event is greater than or equal to the first threshold, or when the *W* pieces of information are *Q₁* pieces of information each indicating that the number of occurrences of the first event is greater than or equal to the first threshold, or when the *W* pieces of information are *Q₁* consecutive pieces of information each indicating that the number of occurrences of the first event is greater than or equal to the first threshold, or when each of the *W* pieces of information indicates that the number of occurrences of the first event is greater than or equal to the first threshold, the network device determines that the first condition is met, where *Q₁* is a positive integer, and 2 ≤ *Q₁ < W.*

Optionally, *Q₁* is specified by a protocol. Certainly, *Q₁* may also be configured by the network device, and the embodiments of the present disclosure are not limited in this regard.

In some embodiments, S220 may specifically include the following. When the *W* pieces of information include one piece of information indicating that the number of occurrences of the second event is less than the second threshold, or when the *W* pieces of information include *Q₂* pieces of information each indicating that the number of occurrences of the second event is less than the second threshold, or when the *W* pieces of information include *Q₂* consecutive pieces of information each indicating that the number of occurrences of the second event is less than the second threshold, or when the *W* pieces of information is one piece of information indicating that the number of occurrences of the second event is less than the second threshold, or when the *W* pieces of information are *Q₂* pieces of information each indicating that the number of occurrences of the second event is less than the second threshold, or when the *W* pieces of information are *Q₂* consecutive pieces of information each indicating that the number of occurrences of the second event is less than the second threshold, or when each of the *W* pieces of information indicates that the number of occurrences of the second event is less than the second threshold, the network device determines that the first condition is met, where *Q₂* is a positive integer, and 2 ≤ *Q₂* < *W.*

Optionally, Q2 is specified by a protocol. Certainly, Q2 may also be configured by the network device, and the embodiments of the present disclosure are not limited in this regard.

In some embodiments, S220 may specifically include the following. The network device activates a fifth evaluation window or a third timer, and further performs one of the following:
in a case where the network device activates the fifth evaluation window, when the network device has received, within the fifth evaluation window, an indication indicating that a probability of occurrence of the first event is greater than or equal to a fifth threshold, or when the network device has received, within the fifth evaluation window, *Z₁* indications each indicating that the probability of occurrence of the first event is greater than or equal to the fifth threshold, or when the network device has consecutively received, within the fifth evaluation window, *Z₁* indications each indicating that the probability of occurrence of the first event is greater than or equal to the fifth threshold, or when each piece of information received by the network device within the fifth evaluation window indicates that the probability of occurrence of the first event is greater than or equal to the fifth threshold, the network device determines that the first condition is met, where *Z₁* is a positive integer, and *Z₁* ≥ 2; or
in a case where the network device activates the fifth evaluation window, when the network device has received, within the fifth evaluation window, an indication indicating that the number of occurrences of the first event is greater than or equal to a sixth threshold, or when the network device has received, within the fifth evaluation window, *Z₂* indications each indicating that the number of occurrences of the first event is greater than or equal to the sixth threshold, or when the network device has consecutively received, within the fifth evaluation window, *Z₂* indications each indicating that the number of occurrences of the first event is greater than or equal to the sixth threshold, or when each piece of information received by the network device within the fifth evaluation window indicates that the number of occurrences of the first event is greater than or equal to the sixth threshold, the network device determines that the first condition is met, where *Z₂* is a positive integer, and *Z₂* ≥ 2; or
in a case where the network device activates the fifth evaluation window, when the network device has received, within the fifth evaluation window, an indication indicating that a probability of occurrence of the second event is less than a seventh threshold, or when the network device has received, within the fifth evaluation window, *Z₃* indications each indicating that the probability of occurrence of the second event is less than the seventh threshold, or when the network device has consecutively received, within the fifth evaluation window, *Z₃* indications each indicating that the probability of occurrence of the second event is less than the seventh threshold, or when each piece of information received by the network device within the fifth evaluation window indicates that the probability of occurrence of the second event is less than the seventh threshold, the network device determines that the first condition is met, where *Z₃* is a positive integer, and *Z₃* ≥ 2; or
in a case where the network device activates the fifth evaluation window, when the network device has received, within the fifth evaluation window, an indication indicating that the number of occurrences of the second event is less than an eighth threshold, or when the network device has received, within the fifth evaluation window, *Z₄* indications each indicating that the number of occurrences of the second event is less than the eighth threshold, or when the network device has consecutively received, within the fifth evaluation window, *Z₄* indications each indicating that the number of occurrences of the second event is less than the eighth threshold, or when each piece of information received by the network device within the fifth evaluation window indicates that the number of occurrences of the second event is less than the eighth threshold, the network device determines that the first condition is met, where *Z₄* is a positive integer, and *Z₄* ≥ 2; or
in a case where the network device activates the third timer, when the network device has received, before the third timer expires, an indication indicating that the probability of occurrence of the first event is greater than or equal to the fifth threshold, or when the network device has received, before the third timer expires, *Z₁* indications each indicating that the probability of occurrence of the first event is greater than or equal to the fifth threshold, or when the network device has consecutively received, before the third timer expires, *Z₁* indications each indicating that the probability of occurrence of the first event is greater than or equal to the fifth threshold, or when each piece of information received by the network device before the third timer expires indicates that the probability of occurrence of the first event is greater than or equal to the fifth threshold, the network device determines that the first condition is met, where *Z₁* is a positive integer, and *Z₁* ≥ 2; or
in a case where the network device activates the third timer, when the network device has received, before the third timer expires, an indication indicating that the number of occurrences of the first event is greater than or equal to the sixth threshold, or when the network device has received, before the third timer expires, *Z₂* indications each indicating that the number of occurrences of the first event is greater than or equal to the sixth threshold, or when the network device has consecutively received, before the third timer expires, *Z₂* indications each indicating that the number of occurrences of the first event is greater than or equal to the sixth threshold, or when each piece of information received by the network before the third timer expires indicates that the number of occurrences of the first event is greater than or equal to the sixth threshold, the network device determines that the first condition is met, wherein *Z₂* is a positive integer, and *Z₂* ≥ 2; or
in a case where the network device activates the third timer, when the network device has received, before the third timer expires, an indication indicating that the probability of occurrence of the second event is less than the seventh threshold, or when the network device has received, before the third timer expires, *Z₃* indications each indicating that the probability of occurrence of the second event is less than the seventh threshold, or when the network device has consecutively received, before the third timer expires, *Z₃* indications each indicating the probability of occurrence of the second event is less than the seventh threshold, or when each piece of information received by the network device before the third timer expires indicates that the probability of occurrence of the second event is less than the seventh threshold, the network device determine that the first condition is met, where *Z₃* is a positive integer, and *Z₃* ≥ 2; or
in a case where the network device activates the third timer, when the network device has received, before the third timer expires, an indication indicating that the number of occurrences of the second event is less than the eighth threshold, or when the network device has received, before the third timer expires, *Z₄* indications each indicating that the number of occurrences of the second event is less than the eighth threshold, or when the network device has consecutively received, before the third timer expires, *Z₄* indications each indicating that the number of occurrences of the second event is less than the eighth threshold, or when each piece of information received before the third timer expires indicates that the number of occurrences of the second event is less than the eighth threshold, the network device determines that the first condition is met, where *Z₄* is a positive integer, and *Z₄* ≥ 2.

Optionally, the fifth threshold is specified by a protocol, or the fifth threshold is configured or determined by the network device.

Optionally, the sixth threshold is specified by a protocol, or the sixth threshold is configured or determined by the network device.

Optionally, the seventh threshold is specified by a protocol, or the seventh threshold is configured or determined by the network device.

Optionally, the eighth threshold is specified by a protocol, or the eighth threshold is configured or determined by the network device.

In some embodiments, the case that the network device activates the fifth evaluation window or the third timer may include the following:
the network device activates the fifth evaluation window or the third timer, when *K₁* is greater than or equal to the first threshold, or *K₂* is less than the second threshold, or when the ratio of *K₁* to *K₁+K₂* is greater than or equal to the third threshold, or when the ratio of *K₂* to *K₁+K₂* is less than the fourth threshold, where the *W* pieces of information indicate that the number of occurrences of the first event is *K₁*, or the *W* pieces of information indicate that the number of consecutive occurrences of the first event is *K₁*, or the *W* pieces of information include information indicating that the number of occurrences of the first event is *K₁*, or the *W* pieces of information include information indicating that the number of consecutive occurrences of the first event is *K₁*; and/or, the *W* pieces of information indicate that the number of occurrences of the second event is *K₂*, or the *W* pieces of information indicate that the number of consecutive occurrences of the second event is *K₂*, or the *W* pieces of information include information indicating that the number of occurrences of the second event is *K₂*, or the *W* pieces of information include information indicating that the number of consecutive occurrences of the second event is *K₂*, where *K₁* and *K₂* are positive integers; or
the network device activates the fifth evaluation window or the third timer, when the *W* pieces of information include one piece of information indicating that the number of occurrences of the first event is greater than or equal to the first threshold, or when the *W* pieces of information include *Q₁* pieces of information each indicating that the number of occurrences of the first event is greater than or equal to the first threshold, or when the *W* pieces of information include *Q₁* consecutive pieces of information each indicating that the number of occurrences of the first event is greater than or equal to the first threshold, or when the *W* pieces of information is one piece of information indicating that the number of occurrences of the first event is greater than or equal to the first threshold, or when the *W* pieces of information are *Q₁* pieces of information each indicating that the number of occurrences of the first event is greater than or equal to the first threshold, or when the *W* pieces of information are *Q₁* consecutive pieces of information each indicating that the number of occurrences of the first event is greater than or equal to the first threshold, where *Q₁* is a positive integer, and 2 ≤ *Q₁ < W;* or
the network device activates the fifth evaluation window or the third timer, when the *W* pieces of information include one piece of information indicating that the number of occurrences of the second event is less than the second threshold, or when the W pieces of information include *Q₂* pieces of information each indicating that the number of occurrences of the second event is less than the second threshold, or when the *W* pieces of information include *Q₂* consecutive pieces of information each indicating that the number of occurrences of the second event is less than the second threshold, or when the *W* pieces of information is one piece of information indicating that the number of occurrences of the second event is less than the second threshold, or when the *W* pieces of information are *Q₂* pieces of information each indicating that the number of occurrences of the second event is less than the second threshold, or when the *W* pieces of information are *Q₂* consecutive pieces of information each indicating that the number of occurrences of the second event is less than the second threshold, or when each of the *W* pieces of information indicates that the number of occurrences of the second event is less than the second threshold, where *Q₂* is a positive integer, and 2 ≤ *Q₂ < W.*

In some embodiments, the fifth evaluation window occupies at least one time unit, where the time unit includes, but is not limited to, one of the following: millisecond, second, minute, hour, symbol, slot, subframe, or frame. Optionally, the fifth evaluation window may be defined by a protocol. Certainly, the fifth evaluation window may also be configured by the network device, and the embodiments of the present disclosure are not limited in this regard.

In some embodiments, the third timer has a running duration of at least one time unit, where the time unit includes, but is not limited to, one of the following: millisecond, second, minute, hour, symbol, slot, subframe, or frames. Optionally, the third timer may be defined by a protocol. Certainly, the third timer may also be configured by the network device, and the embodiments of the present disclosure are not limited in this regard.

In some embodiments, the relevant information of the first event includes a probability of occurrence of the first event within at least one first evaluation window, and/or the relevant information of the second event includes a probability of occurrence of the second event within the at least one first evaluation window.

In some embodiments, the *W* pieces of information include tenth information, where at least one bit of the tenth information indicates the probability of occurrence of the first event within the at least one first evaluation window, and/or at least one bit of the tenth information indicates the probability of occurrence of the second event within the at least one first evaluation window.

In some embodiments, the *W* pieces of information include eleventh information and twelfth information, where at least one bit of the eleventh information indicates the probability of occurrence of the first event within the at least one first evaluation window, and at least one bit of the twelfth information indicates the probability of occurrence of the second event within the at least one first evaluation window.

In some embodiments, S220 may specifically include the following. The network device determines that the first condition is met, when the *W* pieces of information indicate that the probability of occurrence of the first event is greater than or equal to a ninth threshold, or when the W pieces of information indicate that the probability of occurrence of the second event is less than a tenth threshold.

Optionally, the ninth threshold may be defined by a protocol, or may be configured or determined by the network device.

Optionally, the tenth threshold may be defined by a protocol, or may be configured or determined by the network device.

In some embodiments, S220 may specifically include the following. The network device determines that the first condition is met, when the *W* pieces of information include one piece of information indicating that the probability of occurrence of the first event is greater than or equal to the ninth threshold, or when the *W* pieces of information include *Q₃* pieces of information each indicating that the probability of occurrence of the first event is greater than or equal to the ninth threshold, or when the *W* pieces of information include *Q₃* consecutive pieces of information each indicating that the probability of occurrence of the first event is greater than or equal to the ninth threshold, or when the *W* pieces of information is one piece of information indicating that the probability of occurrence of the first event is greater than or equal to the ninth threshold, or when the *W* pieces of information are *Q₃* pieces of information each indicating that the probability of occurrence of the first event is greater than or equal to the ninth threshold, or when the *W* pieces of information are *Q₃* consecutive pieces of information each indicating that the probability of occurrence of the first event is greater than or equal to the ninth threshold, or when each of the *W* pieces of information indicates that the probability of occurrence of the first event is greater than or equal to the ninth threshold, where *Q₃* is a positive integer, and 2 ≤ *Q₃ <* W.

Optionally, *Q₃* may be defined by a protocol, or may be configured or determined by the network device.

In some embodiments, S220 may specifically include the following. The network device determines that the first condition is met, when the W pieces of information include one piece of information indicating that the probability of occurrence of the second event is less than the tenth threshold, or when the *W* pieces of information include *Q₄* pieces of information each indicating that the probability of occurrence of the second event is less than the tenth threshold, or when the *W* pieces of information include *Q₄* consecutive pieces of information each indicating that the probability of occurrence of the second event is less than the tenth threshold, or when the *W* pieces of information is one piece of information indicating that the probability of occurrence of the second event is less than the tenth threshold, or when the *W* pieces of information are *Q₄* pieces of information each indicating that the probability of occurrence of the second event is less than the tenth threshold, or when the *W* pieces of information are *Q₄* consecutive pieces of information each indicating that the probability of occurrence of the second event is less than the tenth threshold, or when each of the W pieces of information indicates that the probability of occurrence of the second event is less than the tenth threshold, where *Q₄* is a positive integer, and 2 ≤ *Q₄* < W.

Optionally, *Q₄* may be defined by a protocol, or may be configured or determined by the network device.

In some embodiments, S220 may specifically include the following. The network device activates a sixth evaluation window or a fourth timer, and further performs one of the following:
in a case where the network device activates the sixth evaluation window, when the network device has received, within the sixth evaluation window, an indication indicating that the probability of occurrence of the first event is greater than or equal to the fifth threshold, or when the network device has received, within the sixth evaluation window, *Z₁* indications each indicating that the probability of occurrence of the first event is greater than or equal to the fifth threshold, or when the network device has consecutively received, within the sixth evaluation window, *Z₁* indications each indicating that the probability of occurrence of the first event is greater than or equal to the fifth threshold, or when each piece of information received by the network device within the sixth evaluation window indicates that the probability of occurrence of the first event is greater than or equal to the fifth threshold, the network device determines that the first condition is met, where *Z₁* is a positive integer, and *Z₁* ≥ 2; or
in a case where the network device activates the sixth evaluation window, when the network device has received, within the sixth evaluation window, an indication indicating that the number of occurrences of the first event is greater than or equal to the sixth threshold, or when the network device has received, within the sixth evaluation window, *Z₂* indications each indicating that the number of occurrences of the first event is greater than or equal to the sixth threshold, or when the network device has consecutively received, within the sixth evaluation window, *Z₂* indications each indicating that the number of occurrences of the first event is greater than or equal to the sixth threshold, or when each piece of information received by the network device within the sixth evaluation window indicates that the number of occurrences of the first event is greater than or equal to the sixth threshold, the network device determines that the first condition is met, where *Z₂* is a positive integer, and *Z₂* ≥ 2; or
in a case where the network device activates the sixth evaluation window, when the network device has received, within the sixth evaluation window, an indication indicating that the probability of occurrence of the second event is less than the seventh threshold, or when the network device has received, within the sixth evaluation window, *Z₃* indications each indicating that the probability of occurrence of the second event is less than the seventh threshold, or when the network device has consecutively received, within the sixth evaluation window, *Z₃* indications each indicating that the probability of occurrence of the second event is less than the seventh threshold, or when each piece of information received by the network device within the sixth evaluation window indicates that the probability of occurrence of the second event is less than the seventh threshold, the network device determines that the first condition is met, where *Z₃* is a positive integer, and *Z₃* ≥ 2; or
in a case where the network device activates the sixth evaluation window, when the network device has received, within the sixth evaluation window, an indication indicating that the number of occurrences of the second event is less than the eighth threshold, or when the network device has received, within the sixth evaluation window, *Z₄* indications each indicating that the number of occurrences of the second event is less than the eighth threshold, or when the network device has consecutively received, within the sixth evaluation window, *Z₄* indications each indicating that the number of occurrences of the second event is less than the eighth threshold, or when each piece of information received by the network device within the sixth evaluation window indicates that the number of occurrences of the second event is less than the eighth threshold, the network device determines that the first condition is met, where *Z₄* is a positive integer, and *Z₄* ≥ 2; or
in a case where the network device activates the fourth timer, when the network device has received, before the fourth timer expires, an indication indicating that the probability of occurrence of the first event is greater than or equal to the fifth threshold, or when the network device has received, before the fourth timer expires, *Z₁* indications each indicating that the probability of occurrence of the first event is greater than or equal to the fifth threshold, or when the network device has consecutively received, before the fourth timer expires, *Z₁* indications each indicating that the probability of occurrence of the first event is greater than or equal to the fifth threshold, or when each piece of information received by the network device before the fourth timer expires indicates that the probability of occurrence of the first event is greater than or equal to the fifth threshold, the network device determines that the first condition is met, where *Z₁* is a positive integer, and *Z₁* ≥ 2; or
in a case where the network device activates the fourth timer, when the network device has received, before the fourth timer expires, an indication indicating that the number of occurrences of the first event is greater than or equal to the sixth threshold, or when the network device has received, before the fourth timer expires, *Z₂* indications each indicating that the number of occurrences of the first event is greater than or equal to the sixth threshold, or when the network device has consecutively received, before the fourth timer expires, *Z₂* indications each indicating that the number of occurrences of the first event is greater than or equal to the sixth threshold, or when each piece of information received by the network device before the fourth timer expires indicates that the number of occurrences of the first event is greater than or equal to the sixth threshold, the network device determines that the first condition is met, where *Z₂* is a positive integer, and *Z₂* ≥ 2; or
in a case where the network device activates the fourth timer, when the network device has received, before the fourth timer expires, an indication indicating that the probability of occurrence of the second event is less than the seventh threshold, or when the network device has received, before the fourth timer expires, *Z₃* indications each indicating that the probability of occurrence of the second event is less than the seventh threshold, or when the network device has consecutively received, before the fourth timer expires, *Z₃* indications each indicating that the probability of occurrence of the second event is less than the seventh threshold, or when each piece of information received by the network device before the fourth timer expires indicates that the probability of occurrence of the second event is less than the seventh threshold, the network device determines that the first condition is met, where *Z₃* is a positive integer, and *Z₃* ≥ 2; or
in a case where the network device activates the fourth timer, when the network device has received, before the fourth timer expires, an indication indicating that the number of occurrences of the second event is less than the eighth threshold, or when the network device has received, before the fourth timer expires, *Z₄* indications each indicating that the number of occurrences of the second event is less than the eighth threshold, or when the network device has consecutively received, before the fourth timer expires, *Z₄* indications each indicating that the number of occurrences of the second event is less than the eighth threshold, or when each piece of information received before the fourth timer expires indicates that the number of occurrences of the second event is less than the eighth threshold, the network device determines that the first condition is met, where *Z₄* is a positive integer, and *Z₄* ≥ 2.

In some embodiments, the network device activates the sixth evaluation window or the fourth timer may include the following:
the network device activates the sixth evaluation window or the fourth timer, when the *W* pieces of information indicate that the probability of occurrence of the first event is greater than or equal to the ninth threshold, or when the W pieces of information indicate that the probability of occurrence of the second event is less than the tenth threshold; or
the network device activates the sixth evaluation window or the fourth timer, when the *W* pieces of information include one piece of information indicating that the probability of occurrence of the first event is greater than or equal to the ninth threshold, or when the *W* pieces of information include *Q₃* pieces of information each indicating that the probability of occurrence of the first event is greater than or equal to the ninth threshold, or when the *W* pieces of information include *Q₃* consecutive pieces of information each indicating that the probability of occurrence of the first event is greater than or equal to the ninth threshold, or when the *W* pieces of information is one piece of information indicating that the probability of occurrence of the first event is greater than or equal to the ninth threshold, or when the *W* pieces of information are *Q₃* pieces of information each indicating that the probability of occurrence of the first event is greater than or equal to the ninth threshold, or when the *W* pieces of information are *Q₃* consecutive pieces of information each indicating that the probability of occurrence of the first event is greater than or equal to the ninth threshold, or when each of the *W* pieces of information indicates that the probability of occurrence of the first event is greater than or equal to the ninth threshold, where *Q₃* is a positive integer, and 2 ≤ *Q₃ < W;* or
the network device activates the sixth evaluation window or the fourth timer, when the *W* pieces of information include one piece of information indicating that the probability of occurrence of the second event is less than the tenth threshold, or when the W pieces of information include *Q₄* pieces of information each indicating that the probability of occurrence of the second event is less than the tenth threshold, or when the W pieces of information include *Q₄* consecutive pieces of information each indicating that the probability of occurrence of the second event is less than the tenth threshold, or when the W pieces of information is one piece of information indicating that the probability of occurrence of the second event is less than the tenth threshold, or when the *W* pieces of information are *Q₄* pieces of information each indicating that the probability of occurrence of the second event is less than the tenth threshold, or when the *W* pieces of information are *Q₄* consecutive pieces of information each indicating that the probability of occurrence of the second event is less than the tenth threshold, or when each of the W pieces of information indicates that the probability of occurrence of the second event is less than the tenth threshold, where *Q₄* is a positive integer, and 2 ≤ *Q₄* < *W.*

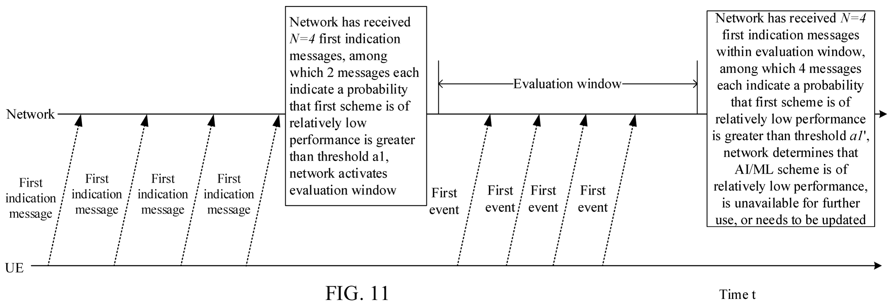

In a specific example, as illustrated in FIG. 11, the network has received one or *N* first indication messages. Each first indication message indicates that a probability of occurrence of the first event associated with the first scheme (for example, the AI/ML-based CSI compression and recovery scheme, the AI/ML-based CSI prediction scheme, the AI/ML-based positioning scheme, the AI/ML-based beam prediction scheme, or the AI/ML-based beam selection scheme) is *P1*, or indicates that the number of occurrences of the first event associated with the first scheme is *N1.* If one first indication message, or each of *K* first indication messages, or each of *K* consecutive first indication messages, or each of the *N* first indication messages indicates *P1* which is greater than threshold *a1* or indicates *N1* which is greater than threshold *Na1*, the network receives one or *M* first indication messages (for example, the network activates window *T* and performs reception within window *T*). If one first indication message, or each of Z first indication messages, or each of *M* first indication messages indicates that the probability of occurrence of the first event is *P1'* which is greater than threshold *a1'* or indicates that the number of occurrences of the first event is *N1'* which is greater than threshold *Na1'*, the network determines that the corresponding first scheme based on AI/ML is of low performance, is unavailable for further use, needs to be terminated, or needs to be updated.

In a specific example, the network has received one or *N* second indication messages. Each second indication message indicates that a probability of occurrence of the second event associated with the first scheme (for example, the AI/ML-based CSI compression and recovery scheme, the AI/ML-based CSI prediction scheme, the AI/ML-based positioning scheme, the AI/ML-based beam prediction scheme, or the AI/ML-based beam selection scheme) is *P2,* or indicates that the number of occurrences of the second event is *N2.* If one first indication message, or each of *K* first indication messages, or each of *K* consecutive first indication messages, or each of the *N* first indication messages indicates *P2* which is less than threshold *a2* or indicates *N2* which is less than threshold *Na2*, the network receives one or *M* first indication messages (for example, the network activates window T and performs reception within window T). If one first indication message, or each of *Z* first indication messages, or each of *Z* consecutive first indication messages, or each of the *M* first indication messages indicates that the probability of occurrence of the first event is *P1'* which is greater than threshold *a1'* or indicates that the number of occurrences of the first event is *N1'* which is greater than threshold *Na1',* the network determines that the corresponding first scheme based on AI/ML is of low performance, is unavailable for further use, needs to be terminated, or needs to be updated.

In a specific example, the network has received one or N first indication messages. Each first indication message indicates that the probability of occurrence of the first event associated with the first scheme (for example, the AI/ML-based CSI compression and recovery scheme, the AI/ML-based CSI prediction scheme, the AI/ML-based positioning scheme, the AI/ML-based beam prediction scheme, or the AI/ML-based beam selection scheme) is *P1,* or indicates that the number of occurrences of the first event is *N1.* If one first indication message, or each of *K* first indication messages, or each of *K* consecutive first indication messages, or each of the *N* first indication messages indicates *P1* which is greater than threshold *a1* or indicates *N1* which is greater than threshold *Na1,* the network receives one or *M* second indication messages (for example, the network activates window *T* and performs reception within the window *T*). If one second indication message, or each of *Z* second indication messages, or each of Z consecutive second indication messages, or each of the *M* second indication messages indicates that the probability of occurrence of the second event is *P2'* which is less than threshold *a2'* or indicates that the number of occurrences of the second event is *N2'* which is less than threshold *Na2'*, the network determines that the corresponding first scheme based on AI/ML is of low performance, is unavailable for further use, needs to be terminated, or needs to be updated.

In a specific example, the network has received one or *N* second indication messages. Each second indication message indicates that the probability of occurrence of the second event associated with the first scheme (for example, the AI/ML-based CSI compression and recovery scheme, the AI/ML-based CSI prediction scheme, the AI/ML-based positioning scheme, the AI/ML-based beam prediction scheme, or the AI/ML-based beam selection scheme) is *P2,* or indicates that the number of occurrences of the second event is *N2.* If one second indication message, or each of *K* second indication messages, or each of *K* consecutive second indication messages, or each of the *N* second indication messages indicates that *P2* is less than threshold *a2* or indicates that *N2* is less than threshold *Na2*, the network receives one or *M* second indication messages (for example, the network activates window T and performs reception within the window *T*). If one second indication message, or each of *Z* second indication messages, or each of Z consecutive second indication messages, or each of the *M* second indication messages indicates that the probability of occurrence of the second event is *P2'* which is less than threshold *a2'* or indicates that the number of occurrences of the second event is *N2'* which is less than threshold *Na2'*, the network determines that the corresponding first scheme based on AI/ML is of low performance, is unavailable for further use, needs to be terminated, or needs to be updated.

It may be noted that, in the embodiments of the present disclosure, the AI/ML-based scheme is highly sensitive to factors such as sample data, environmental changes, and application conditions. The beneficial effect of the present solution is mainly to expect that, through secondary evaluation performed at the network side, the network side can obtain stable AI/ML performance monitoring results based on stable reporting from the UE. This helps avoid AI/ML performance fluctuations caused by factors such as reporting errors, sample data, temporary environmental changes, or temporary non-fulfillment of application conditions, thereby avoiding unnecessary determinations that the AI/ML-based scheme has failed as well as unnecessary scheme switching, and avoiding additional procedures and signaling overhead such as unnecessary updates or reconfigurations of models or schemes. For example, in the case of an AI/MI-based CSI compression and recovery use case, if a single AI/ML performance report result from the UE indicates a degradation in model performance, the network should not determine that the AI/ML-based scheme has become unavailable based solely on that single result. Instead, the network may perform a comprehensive evaluation based on multiple results to determine whether the AI/ML-based scheme should be deemed unavailable at that time. Otherwise, updating the AI/ML scheme based on a one-off report may result in frequent model switching. Based on the method of the present solution, through a specifically designed secondary evaluation process at the network side, a method for relatively stable AI/ML performance monitoring can be established, thereby mitigating AI/ML performance fluctuations caused by sporadic failure reporting.

Therefore, in the embodiments of the present disclosure, the network device may determine whether the first condition is met based on the relevant information of the first event and/or the relevant information of the second event indicated by one or more terminal devices. Specifically, the first event includes at least one of the following: the first scheme does not meet performance requirements; the first scheme is not recommended for use; the first scheme is unavailable for use; or the first metric associated with the first scheme does not meet performance requirements. The second event includes at least one of the following: the first scheme meets performance requirements; the first scheme is recommended for use; the first scheme is available for use; or the first metric associated with the first scheme meets performance requirements. The first condition includes one of the following: a condition for determining that the first scheme does not meet performance requirements; a condition for determining that the first scheme is unavailable for further use; a condition for determining that the first scheme needs to be terminated; and a condition for determining that the first scheme needs to be updated. That is, the stability of the AI/ML-based scheme can be evaluated at the network side using evaluation results of the AI/ML-based scheme reported by the terminal device(s). This helps avoid AI/ML performance fluctuations caused by factors such as reporting errors, sample data, temporary environmental changes, or temporary non-fulfillment of application conditions, thereby avoiding unnecessary determinations that the AI/ML-based scheme has failed as well as unnecessary AI/ML scheme switching, and avoiding additional procedures and signaling overhead such as unnecessary updates or reconfigurations of models or schemes.

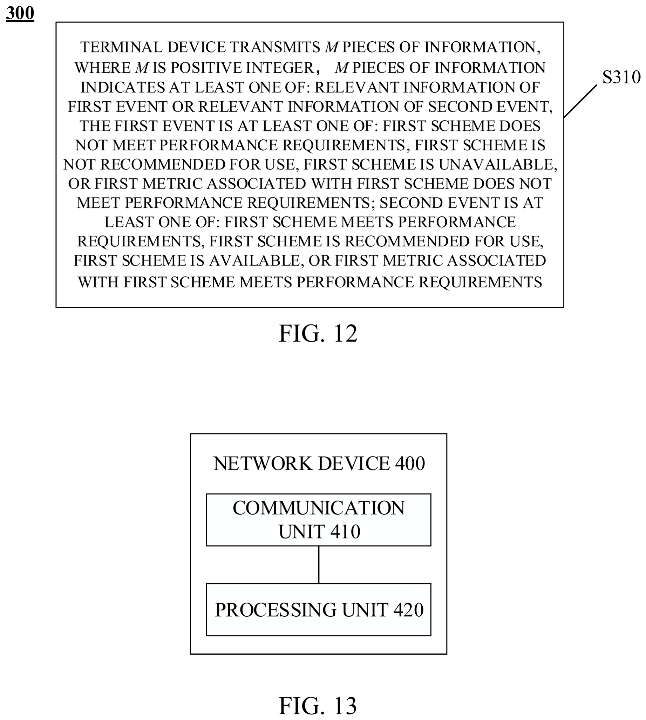

The above illustrates the embodiments at the network device in detail in combination with FIGS. 6 - 11. In conjunction with FIG. 12, the following will illustrate the embodiments at the terminal side in detail. In may be understood that, the embodiments at the terminal side correspond to the embodiments at the network side, and for similar illustrations, reference can be made to the embodiments at the network side.

FIG. 12 is a schematic flow chart of a method 300 for wireless communication according to embodiments of the present disclosure. As illustrated in FIG. 12, the method 300 for wireless communication may include at least part of the following.

S310, a terminal device transmits *M* pieces of information, where the *M* pieces of information indicates at least one of the following: relevant information of a first event or relevant information of a second event. The first event is at least one of the following: the first scheme does not meet performance requirements, the first scheme is not recommended for use, the first scheme is unavailable, or a first metric associated with the first scheme does not meet performance requirements. The second event is at least one of the following: the first scheme meets performance requirements, the first scheme is recommended for use, the first scheme is available, or the first metric associated with the first scheme meets performance requirements. *M* is a positive integer.

In the embodiments of the present disclosure, the stability of an AI/ML scheme (i.e., the first scheme) may be evaluated at the network side using evaluation results of the AI/ML scheme (i.e., the first scheme) reported by the terminal device. This helps avoid AI/ML performance fluctuations caused by factors such as reporting errors, sample data, temporary environmental changes, or temporary non-fulfillment of application conditions, thereby avoiding unnecessary determinations that the AI/ML scheme (i.e., the first scheme) has failed as well as unnecessary switching for the AI/ML scheme (i.e., the first scheme), and avoiding additional procedures and signaling overhead such as unnecessary updates or reconfigurations of models or schemes.

In some embodiments, the first scheme includes but is not limited to one of the following: an AI/ML-based CSI compression and recovery scheme, an AI/ML-based CSI prediction scheme, an AI/ML-based positioning scheme, an AI/ML-based spatial filter prediction scheme, or an AI/ML-based spatial filter selection scheme.

In the embodiments of the present disclosure, the first event corresponds to that the first scheme is of relatively poor performance, and the second event corresponds to that the first scheme is of relatively good performance.

In the embodiments of the present disclosure, the network evaluates, based on the first event and/or the second event, whether the AI/ML-based CSI compression and recovery scheme, the AI/ML-based CSI prediction scheme, the AI/ML-based positioning scheme, the AI/ML-based beam prediction scheme, or the AI/ML-based beam selection scheme is of relatively poor performance, is unavailable for further use, needs to be terminated, and/or needs to be updated.

In some embodiments, the first metric associated with the first scheme may refer to a performance metric of a communication system, such as a data transmission rate, a data transmission latency, a data transmission error rate, channel quality, and so on. Alternatively, the first metric associated with the first scheme may refer to power consumption of the terminal device.

In some embodiments, among the W pieces of information, information indicating the relevant information of the first event refers to AI/ML model error information or AI/ML model underperformance information; and/or among the W pieces of information, information indicating the relevant information of the second event refers to AI/ML model work information or AI/ML model performance compliance information.

In some embodiments, the *M* pieces of information are carried via UCI or RRC signaling. Certainly, the *M* pieces of information may be carried via other signaling, and the present disclosure is not limited in this regard.

It may be noted that, the *M* pieces of information may be reported via UCI. However, for reporting regarding an evaluation window (such as a first evaluation window mentioned later), more effective indication may be achieved through an RRC message. This is because reporting regarding the evaluation window is typically achieved based on a relatively long window or statistical results of multiple determinations, and thus there is no need to use schemes such as UCI for rapid reporting in terms of time sensitivity. Instead, RRC messages can be used to both achieve reporting and avoid occupying UCI resources.

Optionally, different information among the *M* pieces of information may be carried via the same signaling or different signaling.

In some embodiments, when *W* ≥ 2, the *W* pieces of information are *W* pieces of information periodically transmitted.

In some embodiments, a transmission period of the *M* pieces of information is specified by a protocol or configured by the network device.

In some embodiments, the network device configures the transmission period of the *M* pieces of information via DCI, an MAC CE, RRC signaling, an RRC reconfiguration message, system broadcast, an MIB, an SIB1, or other SIBs.

It may be noted that, DCI and MAC CE are mainly characterized by faster indication and quicker updates. RRC signaling and RRC reconfiguration messages are mainly characterized by occupying no physical downlink control channel (PDCCH) resources and relatively flexible configuration. In the case of configuring via system broadcasts, MIB/SIB1/SIB, and other manners, configuration for more UEs can be achieved with fewer resources in a broadcast manner, facilitating unified cell management.

In some embodiments, the *M* pieces of information are triggered by the first event and/or the second event.

In some embodiments, the relevant information of the first event includes whether the first event has occurred, and/or the relevant information of the second event includes whether the second event has occurred.

In some embodiments, the *M* pieces of information include at least one piece of first information. A bit value of each piece of first information indicates that the first event has occurred, and another bit value of each piece of first information indicates that the first event has not occurred.

Optionally, each piece of first information occupies one bit. For example, a bit value of 0 indicates that the first event has occurred, while a bit value of 1 indicates that the first event has not occurred. In another example, a bit value of 1 indicates that the first event has occurred, while a bit value of 0 indicates that the first event has not occurred.

In some embodiments, the *M* pieces of information include at least one piece of second information. A bit value of each piece of second information indicates that the second event has occurred, and another bit value of each piece of second information indicates that the second event has not occurred.

Optionally, each piece of second information occupies one bit. For example, a bit value of 0 indicates that the second event has occurred, while a bit value of 1 indicates that the second event has not occurred. For another example, a bit value of 1 indicates that the second event has occurred, while a bit value of 0 indicates that the second event has not occurred.

In some embodiments, the *M* pieces of information include at least one piece of third information. A bit value of each piece of third information indicates that the first event has occurred, and another bit value of the third information indicates that the second event has occurred.

Optionally, each piece of third information occupies one bit. For example, a bit value of 0 indicates that the first event has occurred, while a bit value of 1 indicates that the second event has occurred. For another example, a bit value of 1 indicates that the first event has occurred, while a bit value of 0 indicates that the second event has occurred.

In some embodiments, the *W* pieces of information include at least one piece of fourth information. Each piece of fourth information includes *K₁ N₁*-bit bitmaps, where a first value in each *N₁*-bit bitmap indicates that the first event has occurred, a second value in each *N₁*-bit bitmap indicates that the first event has not occurred, and the number of occurrences of the first value in each *N₁*-bit bitmap represents the number of occurrences of the first event in *N₁* evaluations, where *K₁* and *N₁* are both positive integers.

Optionally, in each piece of fourth information, the first value is 1, and the second value is 0. For example, in the case where the terminal device reports 11001011 (an 8-bit bitmap, i.e., *K₁ = 1, N₁ =* 8), it indicates that the first event has occurred 5 times in 8 evaluations (specifically in the 1st, 2nd, 5th, 7th, and 8th evaluations). For another example, in the case where the terminal device reports 11001011 11111111 (two 8-bit bitmaps, i.e., *K₁=*2, *N₁=*8), it indicates the first event has occurred 13 times in 16 evaluations (specifically in the 1st, 2nd, 5th, 7th, 8th, and 9th - 16th evaluations).

Optionally, in each piece of fourth information, the first value is 0, and the second value is 1. For example, in the case where the terminal device reports 11001011 (an 8-bit bitmap, i.e., *K₁ = 1, N₁ =* 8), it indicates that the first event has occurred 3 times in 8 evaluations (specifically in the 3rd, 4th, and 6th evaluations). For another example, in the case where the terminal device reports 11001011 11111111 (two 8-bit bitmaps, i.e., *K₁ =* 2, *N₁ =* 8), it indicates the first event has occurred 3 times in 16 evaluations (specifically in the 3rd, 4th, and 6th evaluations).

In some embodiments, the *M* pieces of information include at least one piece of fifth information. Each piece of fifth information includes *K₂ N₂*-bit bitmaps. A first value in each N2-bit bitmap indicates that the second event has occurred, a second value in each N2-bit bitmap indicates that the second event has not occurred, and the number of occurrences of the first value in each *N₂*-bit bitmap represents the number of occurrences of the second event in *N*₂ evaluations, where *K₂* and *N*₂ are positive integers.

Optionally, in each piece of fifth information, the first value is 1, and the second value is 0. For example, in the case where the terminal device reports 11001011 (an 8-bit bitmap, i.e., *K₂=*1, *N₂=*8), it indicates that the second event has occurred 5 times in 8 evaluations (specifically in the 1st, 2nd, 5th, 7th, and 8th evaluations). For another example, in the case where the terminal device reports 11001011 11111111 (two 8-bit bitmaps, i.e., *K₁ =* 2, *N₁ =* 8), it indicates that the second event has occurred 13 times in 16 evaluations (specifically in the 1st, 2nd, 5th, 7th, 8th, and 9th - 16th evaluations).

Optionally, in each piece of fifth information, the first value is 0, and the second value is 1. For example, in the terminal device reports 11001011 (an 8-bit bitmap, i.e., *K₁ = 1, N₁ =* 8), it indicates that the second event has occurred 3 times in 8 evaluations (specifically in the 3rd, 4th, and 6th evaluations). For another example, in the case where the terminal device reports 11001011 11111111 (two 8-bit bitmaps, i.e., *K₁ = 2, N₁* = 8), it indicates that the second event has occurred 3 times in 16 evaluations (specifically in the 3rd, 4th, and 6th evaluations).

In some embodiments, the *M* pieces of information include at least one piece of sixth information. Each piece of sixth information includes *K₃ N₃*-bit bitmaps. A first value in each *N₃*-bit bitmap indicates that the first event has occurred, and a second value in each *N₃*-bit bitmap indicates that the second event has occurred, the number of occurrences of the first value in each *N₃*-bit bitmap represents the number of times of occurrences of the first event in *N₃* evaluations, and the number of occurrences of the second value in each *N₃*-bit bitmap represents the number of occurrences of the second event in *N₃* evaluations, where *K₃* and *N₃* are positive integers.

Optionally, in each piece of sixth information, the first value is 1, and the second value is 0. For example, in the case where the terminal device reports 11001011 (an 8-bit bitmap, i.e., *K₃* = *1, N₃* = 8), it indicates that the first event has occurred 5 times in 8 evaluations (specifically in the 1st, 2nd, 5th, 7th, and 8th evaluations) and the second event has occurred 3 times in 8 evaluations (specifically in the 3rd, 4th, and 6th evaluations). For another example, in the case where the terminal device reports 11001011 11111111 (two 8-bit bitmaps, i.e., *K₃ = 2, N₃* = 8), it indicates that the first event has occurred 13 times in 16 evaluations (specifically in the 1st, 2nd, 5th, 7th, 8th, and 9th-16th evaluations) and the second event has occurred 3 times in 16 evaluations (specifically in the 3rd, 4th, and 6th evaluations).

Optionally, in each piece of sixth information, the first value is 0, and the second value is 1. For example, in the case where the terminal device reports 11001011 (an 8-bit bitmap, i.e., *K₃* = *1, N₃* = 8), it indicates that the second event has occurred 5 times in 8 evaluations (specifically in the 1st, 2nd, 5th, 7th, and 8th evaluations) and the first event has occurred 3 times in 8 evaluations (specifically in the 3rd, 4th, and 6th evaluations). For another example, in the case where the terminal device reports 11001011 11111111 (two 8-bit bitmaps, i.e., *K₃ = 2, N₃ =* 8), it indicates that the second event has occurred 13 times in 16 evaluations (specifically in the 1st, 2nd, 5th, 7th, 8th, and 9^{th} - 16th evaluations) and the first event has occurred 3 times in 16 evaluations (specifically in the 3rd, 4th, and 6th evaluations).

In some embodiments, the relevant information of the first event includes the number of occurrences of the first event within at least one first evaluation window, and/or the relevant information of the second event includes the number of occurrences of the second event within the at least one first evaluation window.

In some embodiments, the *M* pieces of information include seventh information, where at least one bit of the seventh information indicates the number of occurrences of the first event within the at least one first evaluation window, and/or at least one bit of the seventh information indicates the number of occurrences of the second event within the at least one first evaluation window.

In some embodiments, the *M* pieces of information include eighth information and ninth information, where at least one bit of the eighth information indicates the number of occurrences of the first event within the at least one first evaluation window, and at least one bit of the ninth information indicates the number of occurrences of the second event within the at least one first evaluation window.

In some embodiments, the relevant information of the first event includes a probability of occurrence of the first event within at least one first evaluation window, and/or the relevant information of the second event includes a probability of occurrence of the second event within the at least one first evaluation window.

In some embodiments, the *M* pieces of information include tenth information, where at least one bit of the tenth information indicates the probability of occurrence of the first event within the at least one first evaluation window, and/or at least one bit of the tenth information indicates the probability of occurrence of the second event within the at least one first evaluation window.

In some embodiments, the *M* pieces of information include eleventh information and twelfth information, where at least one bit of the eleventh information indicates the probability of occurrence of the first event within the at least one first evaluation window, and at least one bit of the twelfth information indicates the probability of occurrence of the second event within the at least one first evaluation window.

In some embodiments, the first evaluation window occupies at least one time unit, where the time unit includes but is not limited to one of: millisecond, second, minute, hour, symbol, slot, subframe, or frame.

In some embodiments, the first evaluation window is specified by a protocol, or the first evaluation window is configured by the network device.

Therefore, in the embodiments of the present disclosure, the stability of the AI/ML-based scheme can be evaluated at the network side using evaluation results of the AI/ML-based scheme reported by the terminal device. This helps avoid AI/ML performance fluctuations caused by factors such as reporting errors, sample data, temporary environmental changes, or temporary non-fulfillment of application conditions, thereby avoiding unnecessary determinations that the AI/ML-based scheme has failed as well as unnecessary AI/ML scheme switching, and avoiding additional procedures and signaling overhead such as unnecessary updates or reconfigurations of models or schemes.

The above illustrates the method embodiments of the present disclosure in conjunction with FIGS. 6 - 12. The following will illustrate device embodiments of the present disclosure in combination with FIGS. 13 - 17. It may be understood that, the device embodiments correspond to the method embodiments, and for similar illustrations, reference can be made to the method embodiments.

FIG. 13 is a schematic block diagram of a terminal device 400 according to embodiments of the present disclosure. As illustrated in FIG. 13, the terminal device 400 includes a communication unit 410 and a processing unit 420. The communication unit 410 is configured to receive *W* pieces of information, where the *W* pieces of information indicates at least one of the following: relevant information of a first event or relevant information of a second event. The first event is at least one of the following: the first scheme does not meet performance requirements, the first scheme is not recommended for use, the first scheme is unavailable, or a first metric associated with the first scheme does not meet performance requirements. The second event is at least one of the following: the first scheme meets performance requirements, the first scheme is recommended for use, the first scheme is available, or the first metric associated with the first scheme meets performance requirements. *W* is a positive integer. The processing unit 420 is configured to determine whether a first condition is met based on the *W* pieces of information, where the first condition is one of the following: a condition for determining that the first scheme does not meet performance requirements, a condition for determining that the first scheme is unavailable for further use, a condition for determining that the first scheme needs to be terminated, and a condition for determining that the first scheme needs to be updated.

In some embodiments, the relevant information of the first event includes whether the first event has occurred, and/or the relevant information of the second event includes whether the second event has occurred.

In some embodiments, the *W* pieces of information include at least one piece of first information. A bit value of each piece of first information indicates that the first event has occurred, and another bit value of each piece of first information indicates that the first event has not occurred.

In some embodiments, the *W* pieces of information include at least one piece of second information. A bit value of each piece of second information indicates that the second event has occurred, and another bit value of each piece of second information indicates that the second event has not occurred.

In some embodiments, the *W* pieces of information include at least one piece of third information. A bit value of each piece of third information indicates that the first event has occurred, and another bit value of the third information indicates that the second event has occurred.

In some embodiments, the *W* pieces of information include at least one piece of fourth information. Each piece of fourth information includes *K₁ N₁*-bit bitmaps, where a first value in each *N₁*-bit bitmap indicates that the first event has occurred, a second value in each *N₁*-bit bitmap indicates that the first event has not occurred, and the number of occurrences of the first value in each *N₁*-bit bitmap represents the number of occurrences of the first event in *N₁* evaluations, where *K₁* and *N₁* are both positive integers.

In some embodiments, the *W* pieces of information include at least one piece of fifth information. The fifth information includes *K₂ N₂*-bit bitmaps. A first value in each N2-bit bitmap indicates that the second event has occurred, a second value in each N2-bit bitmap indicates that the second event has not occurred, and the number of occurrences of the first value in each *N₂*-bit bitmap represents the number of occurrences of the second event in *N₂* evaluations, where *K₂* and *N₂* are positive integers.

In some embodiments, the *W* pieces of information include at least one piece of sixth information. Each piece of sixth information includes *K₃ N₃*-bit bitmaps. A first value in each *N₃*-bit bitmap indicates that the first event has occurred, and a second value in each *N₃*-bit bitmap indicates that the second event has occurred, the number of occurrences of the first value in each *N₃*-bit bitmap represents the number of occurrences of the first event in *N₃* evaluations, and the number of occurrences of the second value in each *N₃*-bit bitmap represents the number of occurrences of the second event in *N₃* evaluations, where *K₃* and *N₃* are positive integers.

In some embodiments, the processing unit 420 is specifically configured to determine that the first condition is met, in the case where the *W* pieces of information indicate that the first event has occurred, or in the case where the *W* pieces of information include information indicating that the first event has occurred, or in the case where the *W* pieces of information is one piece of information indicating that the first event has occurred.

In some embodiments, the processing unit 420 is specifically configured to determine that the first condition is met, in the case where the *W* pieces of information indicate that the first event has consecutively occurred *S₁* times, or in the case where the *W* pieces of information include information indicating that the first event has consecutively occurred *S₁* times, or in the case where the *W* pieces of information include *S₁* consecutive pieces of information each indicating that the first event has occurred, or in the case where the *W* pieces of information are *S₁* consecutive pieces of information each indicating that the first event has occurred, where *S₁* is a positive integer and *S₁ ≥* 2

In some embodiments, the processing unit 420 is specifically configured to determine that the first condition is met, when the number of pieces of information each indicating occurrence of the first event among the *W* pieces of information is greater than or equal to *S₂,* or when the number of occurrences of the first event indicated by the *W* pieces of information is greater than or equal to *S₂*, or when the W pieces of information are *S₂* pieces of information each indicating occurrence of the first event, or when the W pieces of information are *S₂* pieces of information indicating consecutive occurrences of the first event, where *S₂* is a positive integer.

In some embodiments, the processing unit 420 is specifically configured to determine that the first condition is met, when the number of pieces of information each indicating occurrence of the first event and received within a second evaluation window among the *W* pieces of information is greater than or equal to *S₃*, or when the number of occurrences of the first event indicated by information received within the second evaluation window among the *W* pieces of information is greater than or equal to *S₃*, or when the *W* pieces of information are information received within the second evaluation window and indicating that the number of occurrences of the first event is greater than or equal to *S₃*, where *S₃* is a positive integer.

In some embodiments, the processing unit 420 is specifically configured to activate a third evaluation window, when the *W* pieces of information include *S₄* pieces of information each indicating occurrence of the first event, or when the *W* pieces of information include *S₄* consecutive pieces of information each indicating occurrence of the first event, or when the *W* pieces of information are *S₄* pieces of information each indicating occurrence of the first event, or when the *W* pieces of information are *S₄* consecutive pieces of information each indicating occurrence of the first event. The processing unit 420 is further configured to determine that the first condition is met, when the network device has received, within the third evaluation window, *S₅* pieces of information each indicating occurrence of the first event, or when the network device has consecutively received, within the third evaluation window, *S₅* pieces of information each indicating occurrence of the first event, where both *S₄* and *S₅* are positive integers, and *S₄*≥2 and *S₅*≥2.

In some embodiments, the processing unit 420 is specifically configured to activate the first timer, when the *W* pieces of information include *S₆* pieces of information each indicating occurrence of the first event, or when the *W* pieces of information include *S₆* consecutive pieces of information each indicating occurrence of the first event, or when the *W* pieces of information are *S₆* pieces of information each indicating occurrence of the first event, or when the *W* pieces of information are S6 consecutive pieces of information each indicating occurrence of the first event. The processing unit 420 is further specifically configured to determine that the first condition is met, when the network device has received, before the first timer expires, *S₇* pieces of information each indicating occurrence of the first event, or when the network device has consecutively received, before the first timer expires, *S₇* pieces of information each indicating occurrence of the first event, where both *S₆* and *S₇* are positive integers, and *S₆* ≥ 2 and *S₆* ≥ 2.

In some embodiments, the processing unit 420 is specifically configured to activate a fourth evaluation window, when the *W* pieces of information include *S₈* pieces of information each indicating occurrence of the first event, or when the *W* pieces of information include *S₈* consecutive pieces of information each indicating occurrence of the first event, or when the *W* pieces of information are *S₈* pieces of information each indicating occurrence of the first event, or when the *W* pieces of information are *S₈* consecutive pieces of information each indicating occurrence of the first event. The processing unit 420 is further specifically configured to determine that the first condition is met, when the network device does not receive, within the fourth evaluation window, *S₉* pieces of information each indicating occurrence of the second event, or when the network device does not consecutively receive, within the fourth evaluation window, *S₉* pieces of information each indicating occurrence of the second event, where both *S₈* and *S₉* are positive integers, and *S₈* ≥ 2 and *S₉* ≥ 2.

In some embodiments, the processing unit 420 is specifically configured to activate a second timer, when the *W* pieces of information include *S₁₀* pieces of information each indicating occurrence of the first event, or when the *W* pieces of information include *S₁₀* consecutive pieces of information each indicating occurrence of the first event, or when the *W* pieces of information are *S₁₀* pieces of information each indicating occurrence of the first event, or when the *W* pieces of information are *S₁₀* consecutive pieces of information each indicating occurrence of the first event. The processing unit 420 is further specifically configured to determine that the first condition is met, when the network device does not receive, before the second timer expires, *S₁₁* pieces of information each indicating occurrence of the second event, or when the network device does not consecutively receive, before the second timer expires, *S₁₁* pieces of information each indicating occurrence of the second event, the network device determines that the first condition is met, where both *S₁₀* and *S₁₁* are positive integers, and *S₁₀* ≥ 2 and S11 ≥ 2.

In some embodiments, the relevant information of the first event includes the number of occurrences of the first event within at least one first evaluation window, and/or the relevant information of the second event includes the number of occurrences of the second event within the at least one first evaluation window.

In some embodiments, the *W* pieces of information include seventh information, where at least one bit of the seventh information indicates the number of occurrences of the first event within the at least one first evaluation window, and/or at least one bit of the seventh information indicates the number of occurrences of the second event within the at least one first evaluation window.

In some embodiments, the *W* pieces of information include eighth information and ninth information, where at least one bit of the eighth information indicates the number of occurrences of the first event within the at least one first evaluation window, and at least one bit of the ninth information indicates the number of occurrences of the second event within the at least one first evaluation window.

In some embodiments, the *W* pieces of information indicate that the number of occurrences of the first event is *K₁,* or the *W* pieces of information indicate that the number of consecutive occurrences of the first event is *K₁,* or the *W* pieces of information include information indicating that the number of occurrences of the first event is *K₁,* or the *W* pieces of information include information indicating that the number of consecutive occurrences of the first event is *K₁*; and/or the *W* pieces of information indicate that the number of occurrences of the second event is *K₂*, or the *W* pieces of information indicate that the number of consecutive occurrences of the second event is *K₂*, or the *W* pieces of information include information indicating that the number of occurrences of the second event is *K₂*, or the *W* pieces of information include information indicating that the number of consecutive occurrences of the second event is *K₂*, where both *K₁* and *K₂* are positive integers. The processing unit 420 is specifically configured to determine that the first condition is met, when *K₁* is greater than or equal to a first threshold, or when *K₂* is less than a second threshold, or when a ratio of *K₁* to *K₁ + K₂* is greater than or equal to a third threshold, or when a ratio of *K₂* to *K₁* + *K₂* is less than a fourth threshold.

In some embodiments, the processing unit 420 is specifically configured to determine that the first condition is met, when the *W* pieces of information include one piece of information indicating that the number of occurrences of the first event is greater than or equal to the first threshold, or when the *W* pieces of information include *Q₁* pieces of information each indicating that the number of occurrences of the first event is greater than or equal to the first threshold, or when the *W* pieces of information include *Q₁* consecutive pieces of information each indicating that the number of occurrences of the first event is greater than or equal to the first threshold, or when the *W* pieces of information is one piece of information indicating that the number of occurrences of the first event is greater than or equal to the first threshold, or when the *W* pieces of information are *Q₁* pieces of information each indicating that the number of occurrences of the first event is greater than or equal to the first threshold, or when the *W* pieces of information are *Q₁* consecutive pieces of information each indicating that the number of occurrences of the first event is greater than or equal to the first threshold, or when each of the *W* pieces of information indicates that the number of occurrences of the first event is greater than or equal to the first threshold, where *Q₁* is a positive integer, and 2 ≤ *Q₁ < W.*

In some embodiments, the processing unit 420 is specifically configured to determine that the first condition is met, when the *W* pieces of information include one piece of information indicating that the number of occurrences of the second event is less than the second threshold, or when the *W* pieces of information include *Q₂* pieces of information each indicating that the number of occurrences of the second event is less than the second threshold, or when the *W* pieces of information include *Q₂* consecutive pieces of information each indicating that the number of occurrences of the second event is less than the second threshold, or when the *W* pieces of information is one piece of information indicating that the number of occurrences of the second event is less than the second threshold, or when the *W* pieces of information are *Q₂* pieces of information each indicating that the number of occurrences of the second event is less than the second threshold, or when the *W* pieces of information are *Q₂* consecutive pieces of information each indicating that the number of occurrences of the second event is less than the second threshold, or when each of the *W* pieces of information indicate that the number of occurrences of the second event is less than the second threshold, where *Q₂* is a positive integer, and 2≤ *Q₂ < W.*

In some embodiments, the processing unit 420 is specifically configured to activate a fifth evaluation window or a third timer, and to perform one of the following:
in a case where the network device activates the fifth evaluation window, when the network device has received, within the fifth evaluation window, an indication indicating that a probability of occurrence of the first event is greater than or equal to a fifth threshold, or when the network device has received, within the fifth evaluation window, *Z₁* indications each indicating that the probability of occurrence of the first event is greater than or equal to the fifth threshold, or when the network device has consecutively received, within the fifth evaluation window, *Z₁* indications each indicating that the probability of occurrence of the first event is greater than or equal to the fifth threshold, or when each piece of information received by the network device within the fifth evaluation window indicates that the probability of occurrence of the first event is greater than or equal to the fifth threshold, the network device determines that the first condition is met, where *Z₁* is a positive integer, and *Z₁* ≥ 2; or
in a case where the network device activates the fifth evaluation window, when the network device has received, within the fifth evaluation window, an indication indicating that the number of occurrences of the first event is greater than or equal to a sixth threshold, or when the network device has received, within the fifth evaluation window, *Z₂* indications each indicating that the number of occurrences of the first event is greater than or equal to the sixth threshold, or when the network device has consecutively received, within the fifth evaluation window, *Z₂* indications each indicating that the number of occurrences of the first event is greater than or equal to the sixth threshold, or when each piece of information received by the network device within the fifth evaluation window indicates that the number of occurrences of the first event is greater than or equal to the sixth threshold, the network device determines that the first condition is met, where *Z₂* is a positive integer, and *Z₂* ≥ 2; or
in a case where the network device activates the fifth evaluation window, when the network device has received, within the fifth evaluation window, an indication indicating that a probability of occurrence of the second event is less than a seventh threshold, or when the network device has received, within the fifth evaluation window, *Z₃* indications each indicating that the probability of occurrence of the second event is less than the seventh threshold, or when the network device has consecutively received, within the fifth evaluation window, *Z₃* indications each indicating that the probability of occurrence of the second event is less than the seventh threshold, or when each piece of information received by the network device within the fifth evaluation window indicates that the probability of occurrence of the second event is less than the seventh threshold, the network device determines that the first condition is met, where *Z₃* is a positive integer, and *Z₃* ≥ 2; or
in a case where the network device activates the fifth evaluation window, when the network device has received, within the fifth evaluation window, an indication indicating that the number of occurrences of the second event is less than an eighth threshold, or when the network device has received, within the fifth evaluation window, *Z₄* indications each indicating that the number of occurrences of the second event is less than the eighth threshold, or when the network device has consecutively received, within the fifth evaluation window, *Z₄* indications each indicating that the number of occurrences of the second event is less than the eighth threshold, or when each piece of information received by the network device within the fifth evaluation window indicates that the number of occurrences of the second event is less than the eighth threshold, the network device determines that the first condition is met, where *Z₄* is a positive integer, and *Z₄* ≥ 2; or
in a case where the network device activates the third timer, when the network device has received, before the third timer expires, an indication indicating that the probability of occurrence of the first event is greater than or equal to the fifth threshold, or when the network device has received, before the third timer expires, *Z₁* indications each indicating that the probability of occurrence of the first event is greater than or equal to the fifth threshold, or when the network device has consecutively received, before the third timer expires, *Z₁* indications each indicating that the probability of occurrence of the first event is greater than or equal to the fifth threshold, or when each piece of information received by the network device before the third timer expires indicates that the probability of occurrence of the first event is greater than or equal to the fifth threshold, the network device determines that the first condition is met, where *Z₁* is a positive integer, and *Z₁* ≥ 2;
or in a case where the network device activates the third timer, when the network device has received, before the third timer expires, an indication indicating that the number of occurrences of the first event is greater than or equal to the sixth threshold, or when the network device has received, before the third timer expires, *Z₂* indications each indicating that the number of occurrences of the first event is greater than or equal to the sixth threshold, or when the network device has consecutively received, before the third timer expires, *Z₂* indications each indicating that the number of occurrences of the first event is greater than or equal to the sixth threshold, or when each piece of information received by the network before the third timer expires indicates that the number of occurrences of the first event is greater than or equal to the sixth threshold, the network device determines that the first condition is met, wherein *Z₂* is a positive integer, and *Z₂* ≥ 2; or
in a case where the network device activates the third timer, when the network device has received, before the third timer expires, an indication indicating that the probability of occurrence of the second event is less than the seventh threshold, or when the network device has received, before the third timer expires, *Z₃* indications each indicating that the probability of occurrence of the second event is less than the seventh threshold, or when the network device has consecutively received, before the third timer expires, *Z₃* indications each indicating the probability of occurrence of the second event is less than the seventh threshold, or when each piece of information received by the network device before the third timer expires indicates that the probability of occurrence of the second event is less than the seventh threshold, the network device determine that the first condition is met, where *Z₃* is a positive integer, and *Z₃* ≥ 2; or
in a case where the network device activates the third timer, when the network device has received, before the third timer expires, an indication indicating that the number of occurrences of the second event is less than the eighth threshold, or when the network device has received, before the third timer expires, *Z₄* indications each indicating that the number of occurrences of the second event is less than the eighth threshold, or when the network device has consecutively received, before the third timer expires, *Z₄* indications each indicating that the number of occurrences of the second event is less than the eighth threshold, or when each piece of information received before the third timer expires indicates that the number of occurrences of the second event is less than the eighth threshold, the network device determines that the first condition is met, where *Z₄* is a positive integer, and *Z₄* ≥ 2.

In some embodiments, the processing unit 420 is specifically configured to:
activate the fifth evaluation window or the third timer, when *K₁* is greater than or equal to the first threshold, or *K₂* is less than the second threshold, or when the ratio of *K₁* to *K₁+K₂* is greater than or equal to the third threshold, or when the ratio of *K₂* to *K₁+K₂* is less than the fourth threshold, where the *W* pieces of information indicate that the number of occurrences of the first event is *K₁*, or the *W* pieces of information indicate that the number of consecutive occurrences of the first event is *K₁*, or the *W* pieces of information include information indicating that the number of occurrences of the first event is *K₁*, or the *W* pieces of information include information indicating that the number of consecutive occurrences of the first event is *K₁*; and/or, the *W* pieces of information indicate that the number of occurrences of the second event is *K₂*, or the *W* pieces of information indicate that the number of consecutive occurrences of the second event is *K₂*, or the *W* pieces of information include information indicating that the number of occurrences of the second event is *K₂*, or the *W* pieces of information include information indicating that the number of consecutive occurrences of the second event is *K₂*, where *K₁* and *K₂* are positive integers; or
activate the fifth evaluation window or the third timer, when the *W* pieces of information include one piece of information indicating that the number of occurrences of the first event is greater than or equal to the first threshold, or when the *W* pieces of information include *Q₁* pieces of information each indicating that the number of occurrences of the first event is greater than or equal to the first threshold, or when the *W* pieces of information include *Q₁* consecutive pieces of information each indicating that the number of occurrences of the first event is greater than or equal to the first threshold, or when the *W* pieces of information is one piece of information indicating that the number of occurrences of the first event is greater than or equal to the first threshold, or when the *W* pieces of information are *Q₁* pieces of information each indicating that the number of occurrences of the first event is greater than or equal to the first threshold, or when the *W* pieces of information are *Q₁* consecutive pieces of information each indicating that the number of occurrences of the first event is greater than or equal to the first threshold, where *Q₁* is a positive integer, and 2 ≤ *Q₁ < W*; or
activate the fifth evaluation window or the third timer, when the *W* pieces of information include one piece of information indicating that the number of occurrences of the second event is less than the second threshold, or when the W pieces of information include *Q₂* pieces of information each indicating that the number of occurrences of the second event is less than the second threshold, or when the *W* pieces of information include *Q₂* consecutive pieces of information each indicating that the number of occurrences of the second event is less than the second threshold, or when the *W* pieces of information is one piece of information indicating that the number of occurrences of the second event is less than the second threshold, or when the *W* pieces of information are *Q₂* pieces of information each indicating that the number of occurrences of the second event is less than the second threshold, or when the *W* pieces of information are *Q₂* consecutive pieces of information each indicating that the number of occurrences of the second event is less than the second threshold, or when each of the *W* pieces of information indicates that the number of occurrences of the second event is less than the second threshold, where *Q₂* is a positive integer, and 2 ≤ *Q₂ < W.*

In some embodiments, the relevant information of the first event includes a probability of occurrence of the first event within at least one first evaluation window, and/or the relevant information of the second event includes a probability of occurrence of the second event within the at least one first evaluation window.

In some embodiments, the *W* pieces of information include tenth information, where at least one bit of the tenth information indicates the probability of occurrence of the first event within the at least one first evaluation window, and/or at least one bit of the tenth information indicates the probability of occurrence of the second event within the at least one first evaluation window.

In some embodiments, the *W* pieces of information include eleventh information and twelfth information, where at least one bit of the eleventh information indicates the probability of occurrence of the first event within the at least one first evaluation window, and at least one bit of the twelfth information indicates the probability of occurrence of the second event within the at least one first evaluation window.

In some embodiments, the processing unit 420 is specifically configured to determine that the first condition is met, when the *W* pieces of information indicate that the probability of occurrence of the first event is greater than or equal to a ninth threshold, or when the *W* pieces of information indicate that the probability of occurrence of the second event is less than a tenth threshold.

In some embodiments, the processing unit 420 is specifically configured to determine that the first condition is met, when the *W* pieces of information include one piece of information indicating that the probability of occurrence of the first event is greater than or equal to the ninth threshold, or when the *W* pieces of information include *Q₃* pieces of information each indicating that the probability of occurrence of the first event is greater than or equal to the ninth threshold, or when the *W* pieces of information include *Q₃* consecutive pieces of information each indicating that the probability of occurrence of the first event is greater than or equal to the ninth threshold, or when the *W* pieces of information is one piece of information indicating that the probability of occurrence of the first event is greater than or equal to the ninth threshold, or when the *W* pieces of information are *Q₃* pieces of information each indicating that the probability of occurrence of the first event is greater than or equal to the ninth threshold, or when the *W* pieces of information are *Q₃* consecutive pieces of information each indicating that the probability of occurrence of the first event is greater than or equal to the ninth threshold, or when each of the *W* pieces of information indicates that the probability of occurrence of the first event is greater than or equal to the ninth threshold, where *Q₃* is a positive integer, and 2 ≤ *Q₃ <* W.

In some embodiments, the processing unit 420 is specifically configured to determine that the first condition is met, when the *W* pieces of information include one piece of information indicating that the probability of occurrence of the second event is less than the tenth threshold, or when the *W* pieces of information include *Q₄* pieces of information each indicating that the probability of occurrence of the second event is less than the tenth threshold, or when the *W* pieces of information include *Q₄* consecutive pieces of information each indicating that the probability of occurrence of the second event is less than the tenth threshold, or when the *W* pieces of information is one piece of information indicating that the probability of occurrence of the second event is less than the tenth threshold, or when the *W* pieces of information are *Q₄* pieces of information each indicating that the probability of occurrence of the second event is less than the tenth threshold, or when the *W* pieces of information are *Q₄* consecutive pieces of information each indicating that the probability of occurrence of the second event is less than the tenth threshold, or when each of the W pieces of information indicates that the probability of occurrence of the second event is less than the tenth threshold, where *Q₄* is a positive integer, and 2 ≤*Q₄* < W.

In some embodiments, the processing unit 420 is specifically configured to activate a sixth evaluation window or a fourth timer, and to perform one of the following:
in a case where the network device activates the sixth evaluation window, when the network device has received, within the sixth evaluation window, an indication indicating that the probability of occurrence of the first event is greater than or equal to the fifth threshold, or when the network device has received, within the sixth evaluation window, *Z₁* indications each indicating that the probability of occurrence of the first event is greater than or equal to the fifth threshold, or when the network device has consecutively received, within the sixth evaluation window, *Z₁* indications each indicating that the probability of occurrence of the first event is greater than or equal to the fifth threshold, or when each piece of information received by the network device within the sixth evaluation window indicates that the probability of occurrence of the first event is greater than or equal to the fifth threshold, the network device determines that the first condition is met, where *Z₁* is a positive integer, and *Z₁* ≥ 2; or
in a case where the network device activates the sixth evaluation window, when the network device has received, within the sixth evaluation window, an indication indicating that the number of occurrences of the first event is greater than or equal to the sixth threshold, or when the network device has received, within the sixth evaluation window, *Z₂* indications each indicating that the number of occurrences of the first event is greater than or equal to the sixth threshold, or when the network device has consecutively received, within the sixth evaluation window, *Z₂* indications each indicating that the number of occurrences of the first event is greater than or equal to the sixth threshold, or when each piece of information received by the network device within the sixth evaluation window indicates that the number of occurrences of the first event is greater than or equal to the sixth threshold, the network device determines that the first condition is met, where *Z₂* is a positive integer, and *Z₂* ≥ 2; or
in a case where the network device activates the sixth evaluation window, when the network device has received, within the sixth evaluation window, an indication indicating that the probability of occurrence of the second event is less than the seventh threshold, or when the network device has received, within the sixth evaluation window, *Z₃* indications each indicating that the probability of occurrence of the second event is less than the seventh threshold, or when the network device has consecutively received, within the sixth evaluation window, *Z₃* indications each indicating that the probability of occurrence of the second event is less than the seventh threshold, or when each piece of information received by the network device within the sixth evaluation window indicates that the probability of occurrence of the second event is less than the seventh threshold, the network device determines that the first condition is met, where *Z₃* is a positive integer, and *Z₃* ≥ 2; or
in a case where the network device activates the sixth evaluation window, when the network device has received, within the sixth evaluation window, an indication indicating that the number of occurrences of the second event is less than the eighth threshold, or when the network device has received, within the sixth evaluation window, *Z₄* indications each indicating that the number of occurrences of the second event is less than the eighth threshold, or when the network device has consecutively received, within the sixth evaluation window, *Z₄* indications each indicating that the number of occurrences of the second event is less than the eighth threshold, or when each piece of information received by the network device within the sixth evaluation window indicates that the number of occurrences of the second event is less than the eighth threshold, the network device determines that the first condition is met, where *Z₄* is a positive integer, and *Z₄* ≥ 2; or
in a case where the network device activates the fourth timer, when the network device has received, before the fourth timer expires, an indication indicating that the probability of occurrence of the first event is greater than or equal to the fifth threshold, or when the network device has received, before the fourth timer expires, *Z₁* indications each indicating that the probability of occurrence of the first event is greater than or equal to the fifth threshold, or when the network device has consecutively received, before the fourth timer expires, *Z₁* indications each indicating that the probability of occurrence of the first event is greater than or equal to the fifth threshold, or when each piece of information received by the network device before the fourth timer expires indicates that the probability of occurrence of the first event is greater than or equal to the fifth threshold, the network device determines that the first condition is met, where *Z₁* is a positive integer, and *Z₁* ≥ 2; or
in a case where the network device activates the fourth timer, when the network device has received, before the fourth timer expires, an indication indicating that the number of occurrences of the first event is greater than or equal to the sixth threshold, or when the network device has received, before the fourth timer expires, *Z₂* indications each indicating that the number of occurrences of the first event is greater than or equal to the sixth threshold, or when the network device has consecutively received, before the fourth timer expires, *Z₂* indications each indicating that the number of occurrences of the first event is greater than or equal to the sixth threshold, or when each piece of information received by the network device before the fourth timer expires indicates that the number of occurrences of the first event is greater than or equal to the sixth threshold, the network device determines that the first condition is met, where *Z₂* is a positive integer, and *Z₂* ≥ 2; or
in a case where the network device activates the fourth timer, when the network device has received, before the fourth timer expires, an indication indicating that the probability of occurrence of the second event is less than the seventh threshold, or when the network device has received, before the fourth timer expires, *Z₃* indications each indicating that the probability of occurrence of the second event is less than the seventh threshold, or when the network device has consecutively received, before the fourth timer expires, *Z₃* indications each indicating that the probability of occurrence of the second event is less than the seventh threshold, or when each piece of information received by the network device before the fourth timer expires indicates that the probability of occurrence of the second event is less than the seventh threshold, the network device determines that the first condition is met, where *Z₃* is a positive integer, and *Z₃* ≥ 2; or
in a case where the network device activates the fourth timer, when the network device has received, before the fourth timer expires, an indication indicating that the number of occurrences of the second event is less than the eighth threshold, or when the network device has received, before the fourth timer expires, *Z₄* indications each indicating that the number of occurrences of the second event is less than the eighth threshold, or when the network device has consecutively received, before the fourth timer expires, *Z₄* indications each indicating that the number of occurrences of the second event is less than the eighth threshold, or when each piece of information received before the fourth timer expires indicates that the number of occurrences of the second event is less than the eighth threshold, the network device determines that the first condition is met, where *Z₄* is a positive integer, and *Z₄* ≥ 2.

In some embodiments, the processing unit 420 is specifically configured to:
activate the sixth evaluation window or the fourth timer, when the *W* pieces of information indicate that the probability of occurrence of the first event is greater than or equal to the ninth threshold, or when the W pieces of information indicate that the probability of occurrence of the second event is less than the tenth threshold; or
activate the sixth evaluation window or the fourth timer, when the *W* pieces of information include one piece of information indicating that the probability of occurrence of the first event is greater than or equal to the ninth threshold, or when the *W* pieces of information include *Q₃* pieces of information each indicating that the probability of occurrence of the first event is greater than or equal to the ninth threshold, or when the *W* pieces of information include *Q₃* consecutive pieces of information each indicating that the probability of occurrence of the first event is greater than or equal to the ninth threshold, or when the *W* pieces of information is one piece of information indicating that the probability of occurrence of the first event is greater than or equal to the ninth threshold, or when the *W* pieces of information are *Q₃* pieces of information each indicating that the probability of occurrence of the first event is greater than or equal to the ninth threshold, or when the *W* pieces of information are *Q₃* consecutive pieces of information each indicating that the probability of occurrence of the first event is greater than or equal to the ninth threshold, or when each of the *W* pieces of information indicates that the probability of occurrence of the first event is greater than or equal to the ninth threshold, where *Q₃* is a positive integer, and 2 ≤ *Q₃ < W*; or
activate the sixth evaluation window or the fourth timer, when the *W* pieces of information include one piece of information indicating that the probability of occurrence of the second event is less than the tenth threshold, or when the *W* pieces of information include *Q₄* pieces of information each indicating that the probability of occurrence of the second event is less than the tenth threshold, or when the W pieces of information include *Q₄* consecutive pieces of information each indicating that the probability of occurrence of the second event is less than the tenth threshold, or when the W pieces of information is one piece of information indicating that the probability of occurrence of the second event is less than the tenth threshold, or when the *W* pieces of information are *Q₄* pieces of information each indicating that the probability of occurrence of the second event is less than the tenth threshold, or when the *W* pieces of information are *Q₄* consecutive pieces of information each indicating that the probability of occurrence of the second event is less than the tenth threshold, or when each of the *W* pieces of information indicates that the probability of occurrence of the second event is less than the tenth threshold, where *Q₄* is a positive integer, and 2 ≤ *Q₄ < W.*

In some embodiments, when *W* ≥ 2, the *W* pieces of information are *W* pieces of information periodically transmitted.

In some embodiments, a transmission period of the *W* pieces of information is specified by a protocol, or the transmission period of the *W* pieces of information is configured by the network device.

In some embodiments, the *W* pieces of information are triggered by the first event and/or the second event.

In some embodiments, among the *W* pieces of information, information indicating the relevant information of the first event refers to AI/ML model error information or AI/ML model underperformance information; and/or among the *W* pieces of information, information indicating the relevant information of the second event refers to AI/ML model work information or AI/ML model performance compliance information.

In some embodiments, the *W* pieces of information are carried via UCI or RRC signaling.

In some embodiments, the *W* pieces of information are transmitted by a single terminal device, where model management and performance evaluation at a terminal granularity are performed between the terminal device and the network device; or the *W* pieces of information are transmitted by multiple terminal devices, where model management and performance evaluation at a base station or network granularity are performed between the multiple terminal devices and the network device.

In some embodiments, the first scheme includes one of the following: an AI/ML-based CSI compression and recovery scheme, an AI/ML-based CSI prediction scheme, an AI/ML-based positioning scheme, an AI/ML-based spatial filter prediction scheme, or an AI/ML-based spatial filter selection scheme.

In some embodiments, the above communication unit may be a communication interface or a transceiver, or an input/output interface on a communication chip or system on chip.

It may be noted that, the network device 400 in the embodiments of the present disclosure may correspond to the network device in the method embodiments of the present disclosure. The above and other operations or functions of various units of the network device 400 are respectively for implementing corresponding procedures of the network device in the method 200 as illustrated in FIG. 6, which will not be repeated herein for brevity.

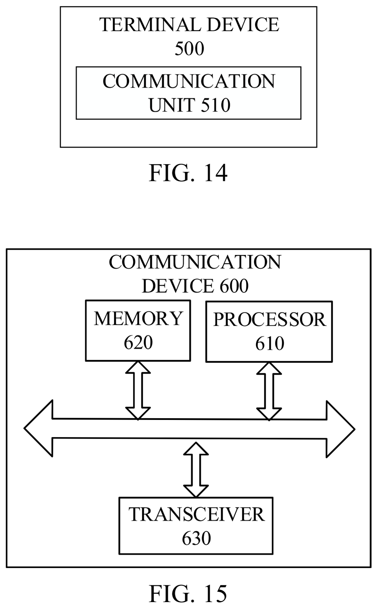

FIG. 14 is a schematic block diagram of a terminal device 500 according to embodiments of the present disclosure. As illustrated in FIG. 14, the terminal device 500 includes a communication unit 510 configured to transmit *M* pieces of information, where *M* is a positive integer. The *M* pieces of information indicates at least one of the following: relevant information of a first event or relevant information of a second event. The first event is at least one of the following: the first scheme does not meet performance requirements, the first scheme is not recommended for use, the first scheme is unavailable, or a first metric associated with the first scheme does not meet performance requirements; the second event is at least one of the following: the first scheme meets performance requirements, the first scheme is recommended for use, the first scheme is available, or the first metric associated with the first scheme meets performance requirements.

In some embodiments, the relevant information of the first event includes whether the first event has occurred, and/or the relevant information of the second event includes whether the second event has occurred.

In some embodiments, the *M* pieces of information include at least one piece of first information. A bit value of each piece of first information indicates that the first event has occurred, and another bit value of each piece of first information indicates that the first event has not occurred.

In some embodiments, the *M* pieces of information include at least one piece of second information. A bit value of each piece of second information indicates that the second event has occurred, and another bit value of each piece of second information indicates that the second event has not occurred.

In some embodiments, the *M* pieces of information include at least one piece of third information. A bit value of each piece of third information indicates that the first event has occurred, and another bit value of the third information indicates that the second event has occurred.

In some embodiments, the *W* pieces of information include at least one piece of fourth information. Each piece of fourth information includes *K₁ N₁*-bit bitmaps, where a first value in each *N₁*-bit bitmap indicates that the first event has occurred, a second value in each *N₁*-bit bitmap indicates that the first event has not occurred, and the number of occurrences of the first value in each *N₁*-bit bitmap represents the number of occurrences of the first event in *N₁* evaluations, where *K₁* and *N₁* are both positive integers.

In some embodiments, the *M* pieces of information include fifth information. The fifth information includes *K₂ N₂*-bit bitmaps. A first value in each N2-bit bitmap indicates that the second event has occurred, a second value in each N2-bit bitmap indicates that the second event has not occurred, and the number of occurrences of the first value in each *N₂*-bit bitmap represents the number of occurrences of the second event in *N₂* evaluations, where *K₂* and *N₂* are positive integers.

In some embodiments, the *M* pieces of information include sixth information. The sixth information includes *K₃ N₃*-bit bitmaps. A first value in each *N₃*-bit bitmap indicates that the first event has occurred, and a second value in each *N₃*-bit bitmap indicates that the second event has occurred, the number of occurrences of the first value in each *N₃*-bit bitmap represents the number of occurrences of the first event in *N₃* evaluations, and the number of occurrences of the second value in each *N₃*-bit bitmap represents the number of occurrences of the second event in *N₃* evaluations, where *K₃* and *N₃* are positive integers.

In some embodiments, the relevant information of the first event includes the number of occurrences of the first event within at least one first evaluation window, and/or the relevant information of the second event includes the number of occurrences of the second event within the at least one first evaluation window.

In some embodiments, the *M* pieces of information include seventh information, where at least one bit of the seventh information indicates the number of occurrences of the first event within the at least one first evaluation window, and/or at least one bit of the seventh information indicates the number of occurrences of the second event within the at least one first evaluation window.

In some embodiments, the *M* pieces of information include eighth information and ninth information, where at least one bit of the eighth information indicates the number of occurrences of the first event within the at least one first evaluation window, and at least one bit of the ninth information indicates the number of occurrences of the second event within the at least one first evaluation window.

In some embodiments, the relevant information of the first event includes a probability of occurrence of the first event within at least one first evaluation window, and/or the relevant information of the second event includes a probability of occurrence of the second event within the at least one first evaluation window.

In some embodiments, the *M* pieces of information include tenth information, where at least one bit of the tenth information indicates the probability of occurrence of the first event within the at least one first evaluation window, and/or at least one bit of the tenth information indicates the probability of occurrence of the second event within the at least one first evaluation window.

In some embodiments, the *M* pieces of information include eleventh information and twelfth information, where at least one bit of the eleventh information indicates the probability of occurrence of the first event within the at least one first evaluation window, and at least one bit of the twelfth information indicates the probability of occurrence of the second event within the at least one first evaluation window.

In some embodiments, the first evaluation window occupies at least one time unit, where the time unit includes but is not limited to one of the following: millisecond, second, minute, hour, symbol, slot, subframe, and frame.

In some embodiments, the first evaluation window is specified by a protocol, or the first evaluation window is configured by the network device.

In some embodiments, when *M* ≥ 2, the *M* pieces of information are *M* pieces of information periodically transmitted.

In some embodiments, a transmission period of the *M* pieces of information is specified by a protocol, or the transmission period of the *M* pieces of information is configured by the network device.

In some embodiments, the *M* pieces of information are triggered by the first event and/or the second event.

In some embodiments, among the *M* pieces of information, information indicating the relevant information of the first event is AI/ML model error information or AI/ML model underperformance information; and/or among the *M* pieces of information, information indicating the relevant information of the second event is AI/ML model work information or AI/ML model performance compliance information.

In some embodiments, the *M* pieces of information are carried via UCI, or the *M* pieces of information are carried via RRC signaling.

In some embodiments, the first scheme includes one of the following: an AI/ML model-based CSI compression and recovery scheme, an AI/ML model-based CSI prediction scheme, an AI/ML model-based positioning scheme, an AI/ML model-based spatial filter prediction scheme, and an AI/ML model-based spatial filter selection scheme.

In some embodiments, the above communication unit may be a communication interface or a transceiver, or an input/output interface on a communication chip or system on chip. The processing unit may be one or more processors.

It may be noted that, the network device 500 in the embodiments of the present disclosure may correspond to the terminal device in the method embodiments of the present disclosure. The above and other operations or functions of various units of the terminal device 500 are respectively for implementing corresponding procedures of the network device in the method 300 as illustrated in FIG. 12, which will not be repeated herein for brevity.

FIG. 15 is a schematic structural diagram of a communication device 600 according to the embodiments of the present disclosure. As illustrated in FIG. 15, the communication device 600 includes a processor 610. The processor 610 is configured to invoke and execute a computer program from a memory to implement the method in the embodiments of the present disclosure.

In some embodiments, as illustrated in FIG. 15, the communication device 600 may further include a memory 620. The processor 610 may invoke and execute a computer program from the memory 620 to implement the method in the embodiments of the present disclosure. The memory 620 may be a separate component independent of the processor 610, or may be integrated within the processor 610.

In some embodiments, as illustrated in FIG. 15, the communication device 600 may further include a transceiver 630. The processor 610 may control the transceiver 630 to communicate with other devices. Specifically, the transceiver 630 may be configured to transmit information or data to other devices, or receive information or data from other devices.

The transceiver 630 may include a transmitter and a receiver. The transceiver 630 may further include one or more antennas.

In some embodiments, the processor 610 may be configured to implement the functions of a processing unit in a terminal device, or the functions of a processing unit in a network device. For simplicity, detailed illustrations are omitted.

In some embodiments, the transceiver 630 may be configured to implement the functions of a communication unit in the terminal device. For simplicity, detailed illustrations are omitted.

In some embodiments, the transceiver 630 may be configured to implement the functions of a communication unit in the network device. For simplicity, detailed illustrations are omitted.

In some embodiments, the communication device 600 may specifically be the network device as described in the embodiments of the present disclosure, and the communication device 600 may be configured to perform the corresponding processes executed by the network device in various methods in the embodiments of the present disclosure. For simplicity, detailed illustrations are omitted.

In some embodiments, the communication device 600 may specifically be the terminal device as described in the embodiments of the present disclosure, and the communication device 600 may be configured to perform the corresponding processes executed by the terminal device in various methods in the embodiments of the present disclosure. For simplicity, detailed illustrations are omitted.

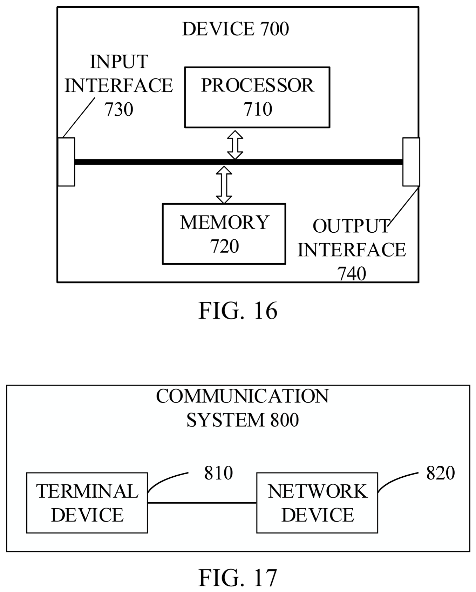

FIG. 16 is a schematic structural diagram of a device 700 according to the embodiments of the present disclosure. As illustrated in FIG. 16, the device 700 includes a processor 710. The processor 710 may invoke and execute a computer program from a memory to implement the method in the embodiments of the present disclosure.

In some embodiments, as illustrated in FIG. 16, the device 700 may further include a memory 720. The processor 710 may invoke and execute a computer program from the memory 720 to implement the method in the embodiments of the present disclosure.

The memory 720 may be a separate component independent of the processor 710, or may be integrated within the processor 710.

In some embodiments, the device 700 may further include an input interface 730. The processor 710 may control the input interface 730 to communicate with other devices or chips. Specifically, the input interface 730 may be configured to acquire information or data transmitted from other devices or chips. Optionally, the processor 710 may be located inside or outside of the chip.

In some embodiments, the processor 710 may be configured to implement the functions of a processing unit in a terminal device, or the functions of a processing unit in a network device. For simplicity, detailed illustrations are omitted.

In some embodiments, the input interface 730 may be configured to implement the functions of a communication unit in the terminal device, or the functions of a communication unit in the network device.

In some embodiments, the device 700 may further include an output interface 740. The processor 710 may control the output interface 740 to communicate with other devices or chips. Specifically, the output interface 740 may be configured to output information or data to other devices or chips. Optionally, the processor 710 may be located inside or outside of the chip.

In some embodiments, the output interface 740 may be configured to implement the functions of a communication unit in the terminal device, or the functions of a communication unit in the network device.

In some embodiments, the device may be applied in the network device as described in the embodiments of the present disclosure, and the device may be configured to perform the corresponding processes executed by the network device in various methods described in the embodiments of the present disclosure. For simplicity, detailed illustrations re omitted.

In some embodiments, the device may be applied in the terminal device as described in the embodiments of the present disclosure, and the device may be configured to perform the corresponding processes executed by the terminal device in various methods described in the embodiments of the present disclosure. For simplicity, detailed illustrations are omitted.

In some embodiments, the device described in the embodiments of the present disclosure may also be implemented as a chip, such as a system-level chip, a system-on-chip (SoC), a chip system, or a system-on-board chip.

FIG. 17 is a schematic block diagram of a communication system 800 according to embodiments of the present disclosure. As illustrated in FIG. 17, the communication system 800 includes a terminal device 810 and a network device 820.

The terminal device 810 may be configured to implement the corresponding functions performed by the terminal device in the methods described above, and the network device 820 may be configured to implement the corresponding functions performed by the network device in the methods described above. For simplicity, detailed illustration is omitted.

It may be understood that, the processor in embodiments of the present disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in embodiments of the present disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It may be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the present disclosure further provide a computer-readable storage medium configured to store a computer program.

In some embodiments, the computer-readable storage medium may be applied to the network device as described in the embodiments of the present disclosure, and the computer program may enable the computer to execute the corresponding processes performed by the network device in various methods in the embodiments of the present disclosure. For simplicity, detailed illustrations are omitted.

In some embodiments, the computer-readable storage medium may be applied to the terminal device as described in the embodiments of the present disclosure, and the computer program may enable the computer to execute the corresponding processes performed by the terminal device in various methods in the embodiments of the present disclosure. For simplicity, detailed illustrations are omitted.

Embodiments of the present disclosure further provide a computer program product including computer program instructions.

In some embodiments, the computer program product may be applied to the network device as described in the embodiments of the present disclosure, and the computer program instructions may enable the computer to execute the corresponding processes performed by the network device in various methods described in the embodiments of the present disclosure. For simplicity, detailed illustrations are omitted.

In some embodiments, the computer program product may be applied to the terminal device as described in the embodiments of the present disclosure, and the computer program instructions may enable the computer to execute the corresponding processes performed by the terminal device in various methods in the embodiments of the present disclosure. For simplicity, detailed illustrations are omitted.

Embodiments of the present disclosure further provide a computer program.

In some embodiments, the computer program may be applied to the network device as described in the embodiments of the present disclosure. When executed on a computer, the computer program enables the computer to perform the corresponding processes executed by the network device in various methods described in the embodiments of the present disclosure. For simplicity, detailed illustrations are omitted.

In some embodiments, the computer program may be applied to the terminal device as described in the embodiments of the present disclosure. When executed on a computer, the computer program enables the computer to perform the corresponding processes executed by the terminal device in various methods in the embodiments of the present disclosure. For simplicity, detailed illustrations are omitted.

Those of ordinary skill in the art will appreciate that units and algorithmic operations of various examples described in connection with embodiments of the present disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the present disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the present disclosure.

In addition, various functional units described in various embodiments of the present disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the present disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
receiving, by a network device, *W* pieces of information, wherein the *W* pieces of information indicate at least one of the following: relevant information of a first event, or relevant information of a second event, wherein the first event comprises at least one of the following: a first scheme does not meet performance requirements, the first scheme is not recommended for use, the first scheme is unavailable, or a first metric associated with the first scheme does not meet performance requirements, and wherein the second event comprises at least one of the following: the first scheme meets performance requirements, the first scheme is recommended for use, the first scheme is available, or the first metric associated with the first scheme meets performance requirements, and wherein *W* is a positive integer;
determining, by the network device, whether a first condition is met based on the *W* pieces of information, wherein the first condition comprises one of the following: a condition for determining that the first scheme does not meet performance requirements, a condition for determining that the first scheme is unavailable for further use, a condition for determining that the first scheme needs to be terminated, and a condition for determining that the first scheme needs to be updated.

2. The method according to claim 1, wherein
the relevant information of the first event comprises whether the first event has occurred, and/or the relevant information of the second event comprises whether the second event has occurred.

3. The method according to claim 2, wherein
the *W* pieces of information comprise at least one piece of first information;
wherein a bit value of each piece of first information indicates that the first event has occurred, and another bit value of each piece of first information indicates that the first event has not occurred.

4. The method according to claim 2, wherein
the *W* pieces of information comprise at least one piece of second information;
wherein a bit value of each piece of second information indicates that the second event has occurred, and another bit value of each piece of second information indicates that the second event has not occurred.

5. The method according to claim 2, wherein
the *W* pieces of information comprise at least one piece of third information;
wherein a bit value of each piece of third information indicates that the first event has occurred, and another bit value of the third information indicates that the second event has occurred.

6. The method according to claim 2, wherein
the *W* pieces of information comprise at least one piece of fourth information;
wherein each piece of fourth information comprises *K₁ N₁*-bit bitmaps, a first value in each *N₁*-bit bitmap indicates that the first event has occurred, a second value in each *N₁*-bit bitmap indicates that the first event has not occurred, and the number of occurrences of the first value in each *N₁*-bit bitmap represents the number of occurrences of the first event in *N₁* evaluations, wherein *K₁* and *N₁* are both positive integers.

7. The method according to claim 2, wherein
the *W* pieces of information comprise at least one piece of fifth information;
wherein each piece of fifth information comprises *K₂ N2-bit* bitmaps, a first value in each *N₂*-bit bitmap indicates that the second event has occurred, a second value in each *N₂*-bit bitmap indicates that the second event has not occurred, and the number of occurrences of the first value in each *N₂*-bit bitmap represents the number of occurrences of the second event in *N₂* evaluations, wherein *K₂* and *N₂* are both positive integers.

8. The method according to claim 2, wherein
the *W* pieces of information comprise at least one piece of sixth information;
wherein each piece of sixth information comprises *K₃ N₃*-bit bitmaps, a first value in each *N₃*-bit bitmap indicates that the first event has occurred, a second value in each *N₃*-bit bitmap indicates that the second event has occurred, the number of occurrences of the first value in each *N₃*-bit bitmap represents the number of occurrences of the first event in *N₃* evaluations, and the number of occurrences of the second value in each *N₃*-bit bitmap represents the number of occurrences of the second event in *N₃* evaluations, wherein *K₃* and *N₃* are both positive integers.

9. The method according to any one of claims 2 to 8, wherein
determining, by the network device, whether the first condition is met based on the *W* pieces of information, comprises:
determining, by the network device, that the first condition is met, when the *W* pieces of information indicate that the first event has occurred, or when the *W* pieces of information comprise information indicating that the first event has occurred, or when the *W* pieces of information is a piece of information indicating that the first event has occurred.

10. The method according to any one of claims 2 to 8, wherein
determining, by the network device, whether the first condition is met based on the *W* pieces of information, comprises:
determining, by the network device, that the first condition is met, when the *W* pieces of information indicate that the first event has consecutively occurred *S₁* times, or when the *W* pieces of information comprise information indicating that the first event has consecutively occurred *S₁* times, or when the *W* pieces of information comprise *S₁* consecutive pieces of information each indicating that the first event has occurred, or when the *W* pieces of information are *S₁* consecutive pieces of information each indicating that the first event has occurred, wherein *S₁* is a positive integer and *S₁* ≥ 2.

11. The method according to any one of claims 2 to 8, wherein determining, by the network device, whether the first condition is met based on the *W* pieces of information, comprises:
determining, by the network device, that the first condition is met, when the number of pieces of information each indicating occurrence of the first event among the *W* pieces of information is greater than or equal to *S₂*, or when the number of occurrences of the first event indicated by the *W* pieces of information is greater than or equal to *S₂*, or when the *W* pieces of information are *S₂* pieces of information each indicating occurrence of the first event, or when the *W* pieces of information are *S₂* pieces of information indicating consecutive occurrences of the first event, wherein *S₂* is a positive integer.

12. The method according to any one of claims 2 to 8, wherein
determining, by the network device, whether the first condition is met based on the *W* pieces of information, comprises:
determining, by the network device, that the first condition is met, when the number of pieces of information each indicating occurrence of the first event and received within a second evaluation window among the *W* pieces of information is greater than or equal to *S₃*, or when the number of occurrences of the first event indicated by information received within the second evaluation window among the *W* pieces of information is greater than or equal to *S₃*, or when the *W* pieces of information are information received within the second evaluation window and indicating that the number of occurrences of the first event is greater than or equal to *S₃*, wherein *S₃* is a positive integer.

13. The method according to any one of claims 2 to 8, wherein
determining, by the network device, whether the first condition is met based on the *W* pieces of information, comprises:
activating, by the network device, a third evaluation window, when the *W* pieces of information comprise *S₄* pieces of information each indicating occurrence of the first event, or when the *W* pieces of information comprises *S₄* consecutive pieces of information each indicating occurrence of the first event, or when the *W* pieces of information are *S₄* pieces of information each indicating occurrence of the first event, or when the *W* pieces of information are *S₄* consecutive pieces of information each indicating occurrence of the first event; and
determining, by the network device, that the first condition is met, when the network device has received, within the third evaluation window, *S₅* pieces of information each indicating occurrence of the first event, or when the network device has consecutively received, within the third evaluation window, *S₅* pieces of information each indicating occurrence of the first event, wherein *S₄* and *S₅* are positive integers, and *S₄* ≥ *2, S₅* ≥ 2.

14. The method according to any one of claims 2 to 8, wherein
determining, by the network device, whether the first condition is met based on the *W* pieces of information, comprises:
activating, by the network device, the first timer, when the W pieces of information comprise S₆ pieces of information each indicating occurrence of the first event, or when the *W* pieces of information comprise *S₆* consecutive pieces of information each indicating occurrence of the first event, or when the *W* pieces of information are *S₆* pieces of information each indicating occurrence of the first event, or when the W pieces of information are *S₆* consecutive pieces of information each indicating occurrence of the first event; and
determining, by the network device, that the first condition is met, when the network device has received, before the first timer expires, *S₇* pieces of information each indicating occurrence of the first event, or when the network device has consecutively received, before the first timer expires, *S₇* pieces of information each indicating occurrence of the first event, wherein *S₆* and *S₇* are positive integers, and *S₆* ≥ 2, *S₇* ≥ 2*.*

15. The method according to any one of claims 2 to 8, wherein
determining, by the network device, whether the first condition is met based on the *W* pieces of information, comprises:
activating, by the network device, a fourth evaluation window, when the *W* pieces of information comprise *S₈* pieces of information each indicating occurrence of the first event, or when the *W* pieces of information comprise *S₈* consecutive pieces of information each indicating occurrence of the first event, or when the *W* pieces of information are *S₈* pieces of information each indicating occurrence of the first event, or when the *W* pieces of information are *S₈* consecutive pieces of information each indicating occurrence of the first event; and
determining, by the network device, that the first condition is met, when the network device has not received, within the fourth evaluation window, *S₉* pieces of information each indicating occurrence of the second event, or when the network device has not consecutively received, within the fourth evaluation window, *S₉* pieces of information each indicating occurrence of the second event, wherein *S₈* and *S₉* are positive integers, *S₈* ≥ 2, and *S₉* ≥ 2.

16. The method according to any one of claims 2 to 8, wherein
determining, by the network device, whether the first condition is met based on the *W* pieces of information, comprises:
activating, by the network device, a second timer, when the *W* pieces of information comprise *S₁₀* pieces of information each indicating occurrence of the first event, or when the *W* pieces of information comprise *S₁₀* consecutive pieces of information each indicating occurrence of the first event, or when the *W* pieces of information are *S₁₀* pieces of information each indicating occurrence of the first event, or when the *W* pieces of information are *S₁₀* consecutive pieces of information each indicating occurrence of the first event; and
determining, by the network device, that the first condition is met, when the network device has not received, before the first timer expires, *S₁₁* pieces of information each indicating occurrence of the second event, or when the network device has not consecutively received, before the first timer expires, *S₁₁* pieces of information each indicating occurrence of the second event, wherein *S₁₀* and *S₁₁* are positive integers, and *S₁₀* ≥ *2, S₁₁* ≥ 2.

17. The method according to claim 1, wherein
the relevant information of the first event comprises the number of occurrences of the first event within at least one first evaluation window, and/or the relevant information of the second event comprises the number of occurrences of the second event within the at least one first evaluation window.

18. The method according to claim 17, wherein
the *W* pieces of information comprise seventh information, wherein at least one bit of the seventh information indicates the number of occurrences of the first event within the at least one first evaluation window, and/or at least one bit of the seventh information indicates the number of occurrences of the second event within the at least one first evaluation window.

19. The method according to claim 17, wherein
the *W* pieces of information comprise eighth information and ninth information, wherein at least one bit of the eighth information indicates the number of occurrences of the first event within the at least one first evaluation window, and at least one bit of the ninth information indicates the number of occurrences of the second event within the at least one first evaluation window.

20. The method according to any one of claims 17 to 19, wherein
the *W* pieces of information indicate that the number of occurrences of the first event is *K₁,* or the *W* pieces of information indicate that the number of consecutive occurrences of the first event is *K₁,* or the *W* pieces of information comprise information indicating that the number of occurrences of the first event is *K₁,* or the *W* pieces of information comprise information indicating that the number of consecutive occurrences of the first event is *K₁*; and/or, the *W* pieces of information indicate that the number of occurrences of the second event is *K₂*, or the *W* pieces of information indicate that the number of consecutive occurrences of the second event is *K₂*, or the *W* pieces of information comprise information indicating that the number of occurrences of the second event is *K₂*, or the *W* pieces of information comprise information indicating that the number of consecutive occurrences of the second event is *K₂*, wherein *K₁* and *K₂* are positive integers;
determining, by the network device, whether the first condition is met based on the *W* pieces of information, comprises:
determining, by the network device, that the first condition is met, when *K₁* is greater than or equal to a first threshold, or *K₂* is less than a second threshold, or a ratio of *K₁* to *K₁+K₂* is greater than or equal to a third threshold, or a ratio of *K₂* to *K₁+K₂* is less than a fourth threshold.

21. The method according to any one of claims 17 to 19, wherein
determining, by the network device, whether the first condition is met based on the *W* pieces of information, comprises:
determining, by the network device, that the first condition is met, when the *W* pieces of information comprise one piece of information indicating that the number of occurrences of the first event is greater than or equal to a first threshold, or when the *W* pieces of information comprise *Q₁* pieces of information each indicating that the number of occurrences of the first event is greater than or equal to the first threshold, or when the *W* pieces of information comprise *Q₁* consecutive pieces of information each indicating that the number of occurrences of the first event is greater than or equal to the first threshold, or when the *W* pieces of information is one piece of information indicating that the number of occurrences of the first event is greater than or equal to the first threshold, or when the *W* pieces of information are *Q₁* pieces of information each indicating that the number of occurrences of the first event is greater than or equal to the first threshold, or when the *W* pieces of information are *Q₁* consecutive pieces of information each indicating that the number of occurrences of the first event is greater than or equal to the first threshold, or when each of the *W* pieces of information indicates that the number of occurrences of the first event is greater than or equal to the first threshold, wherein *Q₁* is a positive integer, and *2* ≤ *Q₁ < W.*

22. The method according to any one of claims 17 to 19, wherein
determining, by the network device, whether the first condition is met based on the *W* pieces of information, comprises:
determining, by the network device, that the first condition is met, when the *W* pieces of information comprise one piece of information indicating that the number of occurrences of the second event is less than a second threshold, or when the *W* pieces of information comprise *Q₂* pieces of information each indicating that the number of occurrences of the second event is less than the second threshold, or when the *W* pieces of information comprise *Q₂* consecutive pieces of information each indicating that the number of occurrences of the second event is less than the second threshold, or when the *W* pieces of information is one piece of information indicating that the number of occurrences of the second event is less than the second threshold, or when the *W* pieces of information are *Q₂* pieces of information each indicating that the number of occurrences of the second event is less than the second threshold, or when the *W* pieces of information are *Q₂* consecutive pieces of information each indicating that the number of occurrences of the second event is less than a second threshold, or when each of the *W* pieces of information indicates that the number of occurrences of the second event is less than the second threshold, wherein *Q₂* is a positive integer, and *2* ≤ *Q₂ < W.*

23. The method according to any one of claims 17 to 19, wherein
determining, by the network device, whether the first condition is met based on the *W* pieces of information, comprises:
activating, by the network device, a fifth evaluation window or a third timer; and one of the following:
in a case where the network device activates the fifth evaluation window, when the network device has received, within the fifth evaluation window, an indication indicating that a probability of occurrence of the first event is greater than or equal to a fifth threshold, or when the network device has received, within the fifth evaluation window, *Z₁* indications each indicating that the probability of occurrence of the first event is greater than or equal to the fifth threshold, or when the network device has consecutively received, within the fifth evaluation window, *Z₁* indications each indicating that the probability of occurrence of the first event is greater than or equal to the fifth threshold, or when each piece of information received by the network device within the fifth evaluation window indicates that the probability of occurrence of the first event is greater than or equal to the fifth threshold, determining, by the network device that the first condition is met, wherein *Z₁* is a positive integer, and *Z₁* ≥ 2; or
in a case where the network device activates the fifth evaluation window, when the network device has received, within the fifth evaluation window, an indication indicating that the number of occurrences of the first event is greater than or equal to a sixth threshold, or when the network device has received, within the fifth evaluation window, *Z₂* indications each indicating that the number of occurrences of the first event is greater than or equal to the sixth threshold, or when the network device has consecutively received, within the fifth evaluation window, *Z₂* indications each indicating that the number of occurrences of the first event is greater than or equal to the sixth threshold, or when each piece of information received by the network device within the fifth evaluation window indicates that the number of occurrences of the first event is greater than or equal to the sixth threshold, determining, by the network device, that the first condition is met, wherein *Z₂* is a positive integer, and *Z₂* ≥ 2; or
in a case where the network device activates the fifth evaluation window, when the network device has received, within the fifth evaluation window, an indication indicating that a probability of occurrence of the second event is less than a seventh threshold, or when the network device has received, within the fifth evaluation window, *Z₃* indications each indicating that the probability of occurrence of the second event is less than the seventh threshold, or when the network device has consecutively received, within the fifth evaluation window, *Z₃* indications each indicating that the probability of occurrence of the second event is less than the seventh threshold, or when each piece of information received by the network device within the fifth evaluation window indicates that the probability of occurrence of the second event is less than the seventh threshold, determining, by the network device, that the first condition is met, wherein *Z₃* is a positive integer, and *Z₃* ≥ 2; or
in a case where the network device activates the fifth evaluation window, when the network device has received within, the fifth evaluation window an indication indicating that the number of occurrences of the second event is less than an eighth threshold, or when the network device has received, within the fifth evaluation window, *Z₄* indications each indicating that the number of occurrences of the second event is less than the eighth threshold, or when the network device has consecutively received, within the fifth evaluation window, *Z₄* indications each indicating that the number of occurrences of the second event is less than the eighth threshold, or when each piece of information received by the network device within the fifth evaluation window indicates that the number of occurrences of the second event is less than the eighth threshold, determining, by the network device, that the first condition is met, wherein *Z₄* is a positive integer, and *Z₄* ≥ 2; or
in a case where the network device activates the third timer, when the network device has received, before the third timer expires, an indication indicating that the probability of occurrence of the first event is greater than or equal to the fifth threshold, or when the network device has received, before the third timer expires, *Z₁* indications each indicating that the probability of occurrence of the first event is greater than or equal to the fifth threshold, or when the network device has consecutively received, before the third timer expires, *Z₁* indications each indicating that the probability of occurrence of the first event is greater than or equal to the fifth threshold, or when each piece of information received by the network device before the third timer expires indicates that the probability of occurrence of the first event is greater than or equal to the fifth threshold, determining, by the network device, that the first condition is met, wherein *Z₁* is a positive integer, and *Z₁* ≥ 2; or
in a case where the network device activates the third timer, when the network device has received, before the third timer expires, an indication indicating that the number of occurrences of the first event is greater than or equal to the sixth threshold, or when the network device has received, before the third timer expires, *Z₂* indications each indicating that the number of occurrences of the first event is greater than or equal to the sixth threshold, or when the network device has consecutively received, before the third timer expires, *Z₂* indications each indicating that the number of occurrences of the first event is greater than or equal to the sixth threshold, or when each piece of information received by the network device before the third timer expires indicates that the number of occurrences of the first event is greater than or equal to the sixth threshold, determining, by the network device, that the first condition is met, wherein *Z₂* is a positive integer, and *Z₂* ≥ 2; or
in a case where the network device activates the third timer, when the network device has received, before the third timer expires, an indication indicating that the probability of occurrence of the second event is less than the seventh threshold, or when the network device has received, before the third timer expires, *Z₃* indications each indicating that the probability of occurrence of the second event is less than the seventh threshold, or when the network device has consecutively received, before the third timer expires, *Z₃* indications each indicating the probability of occurrence of the second event is less than the seventh threshold, or when each piece of information received by the network device before the third timer expires indicates that the probability of occurrence of the second event is less than the seventh threshold, determining, by the network device, that the first condition is met, wherein *Z₃* is a positive integer, and *Z₃* ≥ 2; or
in a case where the network device activates the third timer, when the network device has received, before the third timer expires, an indication indicating that the number of occurrences of the second event is less than the eighth threshold, or when the network device has received, before the third timer expires, *Z₄* indications each indicating that the number of occurrences of the second event is less than the eighth threshold, or when the network device has consecutively received, before the third timer expires, *Z₄* indications each indicating that the number of occurrences of the second event is less than the eighth threshold, or when each piece of information received by the network device before the third timer expires indicates that the number of occurrences of the second event is less than the eighth threshold, determining, by the network device, that the first condition is met, wherein *Z₄* is a positive integer, and *Z₄* ≥ 2.

24. The method according to claim 23, wherein
activating, by the network device, the fifth evaluation window or the third timer, comprises:
activating, by the network device, the fifth evaluation window or the third timer, when *K₁* is greater than or equal to a first threshold, or *K₂* is less than a second threshold, or when a ratio of *K₁* to *K₁+K₂* is greater than or equal to a third threshold, or when a ratio of *K₂* to *K₁+K₂* is less than a fourth threshold, wherein the *W* pieces of information indicate that the number of occurrences of the first event is *K₁,* or the *W* pieces of information indicate that the number of consecutive occurrences of the first event is *K₁,* or the *W* pieces of information comprise information indicating that the number of occurrences of the first event is *K₁,* or the *W* pieces of information comprise information indicating that the number of consecutive occurrences of the first event is *K₁*; and/or, the *W* pieces of information indicate that the number of occurrences of the second event is *K₂*, or the *W* pieces of information indicate that the number of consecutive occurrences of the second event is *K₂*, or the *W* pieces of information comprise information indicating that the number of occurrences of the second event is *K₂*, or the *W* pieces of information comprise information indicating that the number of consecutive occurrences of the second event is *K₂*, wherein *K₁* and *K₂* are positive integers; or
activating, by the network device, the fifth evaluation window or the third timer, when the *W* pieces of information comprise one piece of information indicating that the number of occurrences of the first event is greater than or equal to the first threshold, or when the *W* pieces of information comprise *Q₁* pieces of information each indicating that the number of occurrences of the first event is greater than or equal to the first threshold, or when the *W* pieces of information comprise *Q₁* consecutive pieces of information each indicating that the number of occurrences of the first event is greater than or equal to the first threshold, or when the *W* pieces of information is one piece of information indicating that the number of occurrences of the first event is greater than or equal to the first threshold, or when the *W* pieces of information are *Q₁* pieces of information each indicating that the number of occurrences of the first event is greater than or equal to the first threshold, or when the *W* pieces of information are *Q₁* consecutive pieces of information each indicating that the number of occurrences of the first event is greater than or equal to the first threshold, or when each of the *W* pieces of information indicates that the number of occurrences of the first event is greater than or equal to the first threshold, wherein *Q₁* is a positive integer, and 2 ≤ *Q₁ < W*; or
activating, by the network device, the fifth evaluation window or the third timer, when the *W* pieces of information comprise one piece of information indicating that the number of occurrences of the second event is less than the second threshold, or when the *W* pieces of information comprise *Q₂* pieces of information each indicating that the number of occurrences of the second event is less than the second threshold, or when the *W* pieces of information comprise *Q₂* consecutive pieces of information each indicating that the number of occurrences of the second event is less than the second threshold, or when the *W* pieces of information is one piece of information indicating that the number of occurrences of the second event is less than the second threshold, or when the *W* pieces of information are *Q₂* pieces of information each indicating that the number of occurrences of the second event is less than the second threshold, or when the *W* pieces of information are *Q₂* consecutive pieces of information each indicating that the number of occurrences of the second event is less than the second threshold, or when each of the *W* pieces of information indicates that the number of occurrences of the second event is less than the second threshold, wherein *Q₂* is a positive integer, and 2 ≤ *Q₂ < W.*

25. The method according to claim 1, wherein
the relevant information of the first event comprises a probability of occurrence of the first event within at least one first evaluation window, and/or the relevant information of the second event comprises a probability of occurrence of the second event within the at least one first evaluation window.

26. The method according to claim 25, wherein
the *W* pieces of information comprise tenth information, wherein at least one bit of the tenth information indicates the probability of occurrence of the first event within the at least one first evaluation window, and/or at least one bit of the tenth information indicates the probability of occurrence of the second event within the at least one first evaluation window.

27. The method according to claim 25, wherein
the *W* pieces of information comprise eleventh information and twelfth information, wherein at least one bit of the eleventh information indicates the probability of occurrence of the first event within the at least one first evaluation window, and at least one bit of the twelfth information indicates the probability of occurrence of the second event within the at least one first evaluation window.

28. The method according to any one of claims 25 to 27, wherein
determining, by the network device, whether the first condition is met based on the *W* pieces of information, comprises:
determining, by the network device, that the first condition is met, when the W pieces of information indicate that the probability of occurrence of the first event is greater than or equal to a ninth threshold, or when the *W* pieces of information indicate that the probability of occurrence of the second event is less than a tenth threshold.

29. The method according to any one of claims 25 to 27, wherein
determining, by the network device, whether the first condition is met based on the *W* pieces of information, comprises:
determining, by the network device, that the first condition is met, when the *W* pieces of information comprise one piece of information indicating that the probability of occurrence of the first event is greater than or equal to a ninth threshold, or when the *W* pieces of information comprise *Q₃* pieces of information each indicating that the probability of occurrence of the first event is greater than or equal to the ninth threshold, or when the *W* pieces of information comprise *Q₃* consecutive pieces of information each indicating that the probability of occurrence of the first event is greater than or equal to the ninth threshold, or when the *W* pieces of information is one piece of information indicating that the probability of occurrence of the first event is greater than or equal to the ninth threshold, or when the *W* pieces of information are *Q₃* pieces of information each indicating that the probability of occurrence of the first event is greater than or equal to the ninth threshold, or when the *W* pieces of information are *Q₃* consecutive pieces of information each indicating that the probability of occurrence of the first event is greater than or equal to the ninth threshold, or when each of the *W* pieces of information indicates that the probability of occurrence of the first event is greater than or equal to the ninth threshold;
wherein *Q₃* is a positive integer, and 2 ≤ *Q₃ <* W.

30. The method according to any one of claims 25 to 27, wherein
determining, by the network device, whether the first condition is met based on the *W* pieces of information, comprises:
determining, by the network device, that the first condition is met, when the *W* pieces of information comprise one piece of information indicating that the probability of occurrence of the second event is less than a tenth threshold, or when the *W* pieces of information comprise *Q₄* pieces of information each indicating that the probability of occurrence of the second event is less than the tenth threshold, or when the *W* pieces of information comprise *Q₄* consecutive pieces of information each indicating that the probability of occurrence of the second event is less than the tenth threshold, or when the *W* pieces of information is one piece of information indicating that the probability of occurrence of the second event is less than the tenth threshold, or when the *W* pieces of information are *Q₄* pieces of information each indicating that the probability of occurrence of the second event is less than the tenth threshold, or when the *W* pieces of information are *Q₄* consecutive pieces of information each indicating that the probability of occurrence of the second event is less than the tenth threshold, or when each of the W pieces of information indicates that the probability of occurrence of the second event is less than the tenth threshold;
wherein *Q₄* is a positive integer, and 2 ≤ *Q₄ < W.*

31. The method according to any one of claims 25 to 27, wherein
determining, by the network device, whether the first condition is met based on the *W* pieces of information, comprises:
activating, by the network device, a sixth evaluation window or a fourth timer; and one of the following:
in a case where the network device activates the sixth evaluation window, when the network device has received, within the sixth evaluation window, an indication indicating that the probability of occurrence of the first event is greater than or equal to a fifth threshold, or when the network device has received, within the sixth evaluation window, *Z₁* indications each indicating that the probability of occurrence of the first event is greater than or equal to the fifth threshold, or when the network device has consecutively received, within the sixth evaluation window, *Z₁* indications each indicating that the probability of occurrence of the first event is greater than or equal to the fifth threshold, or when each piece of information received by the network device within the sixth evaluation window indicates that the probability of occurrence of the first event is greater than or equal to the fifth threshold, determining, by the network device, that the first condition is met, wherein *Z₁* is a positive integer, and *Z₁* ≥ 2; or
in a case where the network device activates the sixth evaluation window, when the network device has received, within the sixth evaluation window, an indication indicating that the number of occurrences of the first event is greater than or equal to a sixth threshold, or when the network device has received, within the sixth evaluation window, *Z₂* indications each indicating that the number of occurrences of the first event is greater than or equal to the sixth threshold, or when the network device has consecutively received, within the sixth evaluation window, *Z₂* indications each indicating that the number of occurrences of the first event is greater than or equal to the sixth threshold, or when each piece of information received by the network device within the sixth evaluation window indicates that the number of occurrences of the first event is greater than or equal to the sixth threshold, determining, by the network device, that the first condition is met, wherein *Z₂* is a positive integer, and *Z₂* ≥ 2; or
in a case where the network device activates the sixth evaluation window, when the network device has received, within the sixth evaluation window, an indication indicating that the probability of occurrence of the second event is less than a seventh threshold, or when the network device has received, within the sixth evaluation window, *Z₃* indications each indicating that the probability of occurrence of the second event is less than the seventh threshold, or when the network device has consecutively received, within the sixth evaluation window, *Z₃* indications each indicating that the probability of occurrence of the second event is less than the seventh threshold, or when each piece of information received by the network device within the sixth evaluation window indicates that the probability of occurrence of the second event is less than the seventh threshold, determining, by the network device, that the first condition is met, wherein *Z₃* is a positive integer, and *Z₃* ≥ 2; or
in a case where the network device activates the sixth evaluation window, when the network device has received, within the sixth evaluation window, an indication indicating that the number of occurrences of the second event is less than an eighth threshold, or when the network device has received, within the sixth evaluation window, *Z₄* indications each indicating that the number of occurrences of the second event is less than the eighth threshold, or when the network device has consecutively received, within the sixth evaluation window, *Z₄* indications each indicating that the number of occurrences of the second event is less than the eighth threshold, or when each piece of information received by the network device within the sixth evaluation window indicates that the number of occurrences of the second event is less than the eighth threshold, determining, by the network device, that the first condition is met, wherein *Z₄* is a positive integer, and *Z₄* ≥ 2; or
in a case where the network device activates the fourth timer, when the network device has received, before the fourth timer expires, an indication indicating that the probability of occurrence of the first event is greater than or equal to the fifth threshold, or when the network device has received, before the fourth timer expires, *Z₁* indications each indicating that the probability of occurrence of the first event is greater than or equal to the fifth threshold, or when the network device has consecutively received, before the fourth timer expires, *Z₁* indications each indicating that the probability of occurrence of the first event is greater than or equal to the fifth threshold, or when each piece of information received by the network device before the fourth timer expires indicates that the probability of occurrence of the first event is greater than or equal to the fifth threshold, determining, by the network device, that the first condition is met, wherein *Z₁* is a positive integer, and *Z₁* ≥ 2; or
in a case where the network device activates the fourth timer, when the network device has received, before the fourth timer expires, an indication indicating that the number of occurrences of the first event is greater than or equal to the sixth threshold, or when the network device has received, before the fourth timer expires, *Z₂* indications each indicating that the number of occurrences of the first event is greater than or equal to the sixth threshold, or when the network device has consecutively received, before the fourth timer expires, *Z₂* indications each indicating that the number of occurrences of the first event is greater than or equal to the sixth threshold, or when each piece of information received by the network before the fourth timer expires indicates that the number of occurrences of the first event is greater than or equal to the sixth threshold, determining, by the network device, that the first condition is met, wherein *Z₂* is a positive integer, and *Z₂* ≥ 2; or
in a case where the network device activates the fourth timer, when the network device has received, before the fourth timer expires, an indication indicating that the probability of occurrence of the second event is less than the seventh threshold, or when the network device has received, before the fourth timer expires, *Z₃* indications each indicating that the probability of occurrence of the second event is less than the seventh threshold, or when the network device has consecutively received, before the fourth timer expires, *Z₃* indications each indicating that the probability of occurrence of the second event is less than the seventh threshold, or when each piece of information received by the network device before the fourth timer expires indicates that the probability of occurrence of the second event is less than the seventh threshold, determining, by the network device, that the first condition is met, wherein *Z₃* is a positive integer, and *Z₃* ≥ 2; or
in a case where the network device activates the fourth timer, when the network device has received, before the fourth timer expires, an indication indicating that the number of occurrences of the second event is less than the eighth threshold, or when the network device has received, before the fourth timer expires, *Z₄* indications each indicating that the number of occurrences of the second event is less than the eighth threshold, or when the network device has consecutively received, before the fourth timer expires, *Z₄* indications each indicating that the number of occurrences of the second event is less than the eighth threshold, or when each piece of information received before the fourth timer expires indicates that the number of occurrences of the second event is less than the eighth threshold, determining, by the network device, that the first condition is met, wherein *Z₄* is a positive integer, and *Z₄* ≥ 2.

32. The method according to claim 31, wherein
activating, by the network device, the sixth evaluation window or the fourth timer, comprises:
activating, by the network device, the sixth evaluation window or the fourth timer, when the *W* pieces of information indicate that the probability of occurrence of the first event is greater than or equal to a ninth threshold, or when the *W* pieces of information indicate that the probability of occurrence of the second event is less than a tenth threshold; or
activating, by the network device, the sixth evaluation window or the fourth timer, when the *W* pieces of information comprise one piece of information indicating that the probability of occurrence of the first event is greater than or equal to the ninth threshold, or when the *W* pieces of information comprise *Q₃* pieces of information each indicating that the probability of occurrence of the first event is greater than or equal to the ninth threshold, or when the *W* pieces of information comprise *Q₃* consecutive pieces of information each indicating that the probability of occurrence of the first event is greater than or equal to the ninth threshold, or when the *W* pieces of information is one piece of information indicating that the probability of occurrence of the first event is greater than or equal to the ninth threshold, or when the *W* pieces of information are *Q₃* pieces of information each indicating that the probability of occurrence of the first event is greater than or equal to the ninth threshold, or when the *W* pieces of information are *Q₃* consecutive pieces of information each indicating that the probability of occurrence of the first event is greater than or equal to the ninth threshold, or when each of the *W* pieces of information indicates that the probability of occurrence of the first event is greater than or equal to the ninth threshold, wherein *Q₃* is a positive integer, and 2 *≤ Q₃* < *W*; or
activating, by the network device, the sixth evaluation window or the fourth timer, when the *W* pieces of information comprise one piece of information indicating that the probability of occurrence of the second event is less than the tenth threshold, or when the *W* pieces of information comprise *Q₄* pieces of information each indicating that the probability of occurrence of the second event is less than the tenth threshold, or when the *W* pieces of information comprise *Q₄* consecutive pieces of information each indicating that the probability of occurrence of the second event is less than the tenth threshold, or when the W pieces of information is one piece of information indicating that the probability of occurrence of the second event is less than the tenth threshold, or when the *W* pieces of information are *Q₄* pieces of information each indicating that the probability of occurrence of the second event is less than the tenth threshold, or when the *W* pieces of information are *Q₄* consecutive pieces of information each indicating that the probability of occurrence of the second event is less than the tenth threshold, or when each of the *W* pieces of information indicates that the probability of occurrence of the second event is less than the tenth threshold, wherein *Q₄* is a positive integer, and 2 ≤ *Q₄* < *W.*

33. The method according to any one of claims 1 to 32, wherein
when *W* ≥ 2, the *W* pieces of information are *W* pieces of information periodically transmitted.

34. The method according to claim 33, wherein
a transmission period of the *W* pieces of information is specified by a protocol, or the transmission period of the *W* pieces of information is configured by the network device.

35. The method according to any one of claims 1 to 32, wherein
the *W* pieces of information are triggered by the first event and/or the second event.

36. The method according to any one of claims 1 to 35, wherein
among the *W* pieces of information, information indicating the relevant information of the first event is artificial intelligence/machine learning (AI/ML) model error information or AI/ML model underperformance information; and/or
among the *W* pieces of information, information indicating the relevant information of the second event is AI/ML model work information or AI/ML model performance compliance information.

37. The method according to any one of claims 1 to 36, wherein
the *W* pieces of information are carried via uplink control information (UCI), or the *W* pieces of information are carried via radio resource control (RRC) signaling.

38. The method according to any one of claims 1 to 37, wherein
the *W* pieces of information are transmitted by a single terminal device, wherein model management and performance evaluation at a terminal granularity are performed between the terminal device and the network device; or
the *W* pieces of information are transmitted by a plurality of terminal devices, wherein model management and performance evaluation at a base station granularity or a network granularity are performed between the plurality of terminal devices and the network device.

39. The method according to any one of claims 1 to 38, wherein
the first scheme comprises one of the following: an AI/ML model-based channel state information (CSI) compression and recovery scheme, an AI/ML model-based CSI prediction scheme, an AI/ML model-based positioning scheme, an AI/ML model-based spatial filter prediction scheme, and an AI/ML model-based spatial filter selection scheme.

40. A method for wireless communication, comprising:
transmitting, by a terminal device, *M* pieces of information, wherein *M* is a positive integer;
wherein the *M* pieces of information indicates at least one of the following: relevant information of a first event or relevant information of a second event;
wherein the first event is at least one of the following: the first scheme does not meet performance requirements, the first scheme is not recommended for use, the first scheme is unavailable, or a first metric associated with the first scheme does not meet performance requirements; the second event is at least one of the following: the first scheme meets performance requirements, the first scheme is recommended for use, the first scheme is available, or the first metric associated with the first scheme meets performance requirements.

41. The method of claim 40, wherein
the relevant information of the first event comprises whether the first event has occurred, and/or the relevant information of the second event comprises whether the second event has occurred.

42. The method of claim 41, wherein
the *M* pieces of information comprise at least one piece of first information, wherein a bit value of each piece of first information indicates that the first event has occurred, and another bit value of each piece of first information indicates that the first event has not occurred.

43. The method of claim 41, wherein
the *M* pieces of information comprise at least one piece of second information, wherein a bit value of each piece of second information indicates that the second event has occurred, and another bit value of each piece of second information indicates that the second event has not occurred.

44. The method of claim 41, wherein
the *M* pieces of information comprise at least one piece of third information, wherein a bit value of each piece of third information indicates that the first event has occurred, and another bit value of the third information indicates that the second event has occurred.

45. The method of claim 41, wherein
the *W* pieces of information comprise fourth information, wherein the fourth information comprises *K₁ N₁*-bit bitmaps, wherein a first value in each *N₁*-bit bitmap indicates that the first event has occurred, a second value in each *N₁*-bit bitmap indicates that the first event has not occurred, and the number of occurrences of the first value in each *N₁*-bit bitmap represents the number of occurrences of the first event in *N₁* evaluations, and wherein *K₁* and *N₁* are both positive integers.

46. The method of claim 41, wherein
the *M* pieces of information comprise fifth information, wherein the fifth information comprises *K₂ N₂*-bit bitmaps, wherein a first value in each *N₂*-bit bitmap indicates that the second event has occurred, a second value in each *N₂*-bit bitmap indicates that the second event has not occurred, and the number of occurrences of the first value in each *N₂*-bit bitmap represents the number of occurrences of the second event in *N₂* evaluations, and wherein *K₂* and *N₂* are positive integers.

47. The method of claim 41, wherein
the *M* pieces of information comprise sixth information, wherein the sixth information comprises *K₃ N₃*-bit bitmaps, wherein a first value in each *N₃*-bit bitmap indicates that the first event has occurred, and a second value in each *N₃*-bit bitmap indicates that the second event has occurred, the number of occurrences of the first value in each *N₃*-bit bitmap represents the number of occurrences of the first event in *N₃* evaluations, and the number of occurrences of the second value in each *N₃*-bit bitmap represents the number of occurrences of the second event in *N₃* evaluations, and wherein *K₃* and *N₃* are positive integers.

48. The method of claim 40, wherein
the relevant information of the first event comprises the number of occurrences of the first event within at least one first evaluation window, and/or the relevant information of the second event comprises the number of occurrences of the second event within the at least one first evaluation window.

49. The method of claim 48, wherein
the *M* pieces of information comprise seventh information, wherein at least one bit of the seventh information indicates the number of occurrences of the first event within the at least one first evaluation window, and/or at least one bit of the seventh information indicates the number of occurrences of the second event within the at least one first evaluation window.

50. The method of claim 48, wherein
the *M* pieces of information comprise eighth information and ninth information, wherein at least one bit of the eighth information indicates the number of occurrences of the first event within the at least one first evaluation window, and at least one bit of the ninth information indicates the number of occurrences of the second event within the at least one first evaluation window.

51. The method of claim 40, wherein
the relevant information of the first event comprises a probability of occurrence of the first event within at least one first evaluation window, and/or the relevant information of the second event comprises a probability of occurrence of the second event within the at least one first evaluation window.

52. The method of claim 51, wherein
the *M* pieces of information comprise tenth information, wherein at least one bit of the tenth information indicates the probability of occurrence of the first event within the at least one first evaluation window, and/or at least one bit of the tenth information indicates the probability of occurrence of the second event within the at least one first evaluation window.

53. The method of claim 51, wherein
the *M* pieces of information comprise eleventh information and twelfth information, wherein at least one bit of the eleventh information indicates the probability of occurrence of the first event within the at least one first evaluation window, and at least one bit of the twelfth information indicates the probability of occurrence of the second event within the at least one first evaluation window.

54. The method of any one of claims 48 to 53, wherein
the first evaluation window occupies at least one time unit, wherein the time unit comprises one of: millisecond, second, minute, hour, symbol, slot, subframe, and frame.

55. The method of any one of claims 48 to 54, wherein
the first evaluation window is specified by a protocol, or the first evaluation window is configured by the network device.

56. The method of any one of claims 40 to 55, wherein
when *M* ≥ 2, the *M* pieces of information are *M* pieces of information periodically transmitted.

57. The method of claim 56, wherein
a transmission period of the *M* pieces of information is specified by a protocol, or the transmission period of the *M* pieces of information is configured by the network device.

58. The method according to any one of claims 40 to 55, wherein
the *M* pieces of information are triggered by the first event and/or the second event.

59. The method according to any one of claims 40 to 58, wherein
among the *M* pieces of information, information indicating the relevant information of the first event is artificial intelligence/machine learning (AI/ML) model error information or AI/ML model underperformance information; and/or
among the *M* pieces of information, information indicating the relevant information of the second event is AI/ML model work information or AI/ML model performance compliance information.

60. The method according to any one of claims 40 to 59, wherein
the *W* pieces of information are carried via uplink control information (UCI), or the *W* pieces of information are carried via radio resource control (RRC) signaling.

61. The method according to any one of claims 40 to 60, wherein
the first scheme comprises one of the following: an AI/ML model-based channel state information (CSI) compression and recovery scheme, an AI/ML model-based CSI prediction scheme, an AI/ML model-based positioning scheme, an AI/ML model-based spatial filter prediction scheme, and an AI/ML model-based spatial filter selection scheme.

62. A network device, comprising:
a communication unit configured to receive *W* pieces of information, wherein the *W* pieces of information indicate at least one of the following: relevant information of a first event, or relevant information of a second event, wherein the first event comprises at least one of the following: a first scheme does not meet performance requirements, the first scheme is not recommended for use, the first scheme is unavailable, or a first metric associated with the first scheme does not meet performance requirements, and wherein the second event comprises at least one of the following: the first scheme meets performance requirements, the first scheme is recommended for use, the first scheme is available, or the first metric associated with the first scheme meets performance requirements, and wherein *W* is a positive integer; and
a processing unit configured to determine whether a first condition is met based on the *W* pieces of information, wherein the first condition comprises one of the following: a condition for determining that the first scheme does not meet performance requirements, a condition for determining that the first scheme is unavailable for further use, a condition for determining that the first scheme needs to be terminated, and a condition for determining that the first scheme needs to be updated.

63. A terminal device, comprising:
a communication unit configured to transmit *M* pieces of information, wherein *M* is a positive integer;
wherein the *M* pieces of information indicates at least one of the following: relevant information of a first event or relevant information of a second event;
wherein the first event is at least one of the following: the first scheme does not meet performance requirements, the first scheme is not recommended for use, the first scheme is unavailable, or a first metric associated with the first scheme does not meet performance requirements; the second event is at least one of the following: the first scheme meets performance requirements, the first scheme is recommended for use, the first scheme is available, or the first metric associated with the first scheme meets performance requirements.

64. A network device, comprising: a processor and a memory, wherein the memory is configured to store a computer program, and the processor is configured to invoke and execute the computer program stored in the memory, such that the network device performs the method according to any one of claims 1 to 39.

65. A terminal device, comprising: a processor and a memory, wherein the memory is configured to store a computer program, and the processor is configured to invoke and execute the computer program stored in the memory, such that the terminal device performs the method according to any one of claims 40 to 61.

66. A chip, comprising: a processor configured to invoke and execute a computer program from a memory, such that a device equipped with the chip performs the method according to any one of claims 1 to 39.

67. A chip, comprising: a processor configured to invoke and execute a computer program from a memory, such that a device equipped with the chip performs the method according to any one of claims 40 to 61.

68. A computer-readable storage medium, configured to store a computer program, wherein when the computer program is executed, the method according to any one of claims 1 to 39 is implemented.

69. A computer-readable storage medium, configured to store a computer program, wherein when the computer program is executed, the method according to any one of claims 40 to 61 is implemented.

70. A computer program product, comprising computer program instructions, wherein when the computer program instructions are executed, the method according to any one of claims 1 to 39 is implemented.

71. A computer program product, comprising computer program instructions, wherein when the computer program instructions are executed, the method according to any one of claims 40 to 61 is implemented.

72. A computer program, wherein when the computer program is executed, the method according to any one of claims 1 to 39 is implemented.

73. A computer program, wherein when the computer program is executed, the method according to any one of claims 40 to 61 is implemented.
